# EUROPEAN PATENT APPLICATION

(11) **EP 4 131 123 A1**
(43) Date of publication of application: **08.02.2023**
(21) Application number: 22785679.6
(22) Date of filing: 08.06.2022
(51) Int. Cl.: G06Q 30/06, G06Q 40/06

(54) **SECONDARY BATTERY MANAGEMENT DEVICE**

(30) Priority: 18.06.2021 JP 2021101757
(71) Applicant: 3DOM ALLIANCE INC., Tokyo 107-0052 (JP); TESNOLOGY Inc., Minato-ku Tokyo 107-0052 (JP)
(72) Inventor: MATSUMURA, Akihiko, Tokyo 1070052 (JP); KONDO, Katsuhiko, Tokyo 1070052 (JP)
(74) Representative: Schröer, Gernot H.
(86) International application number: PCT/JP2022/023123
(87) International publication number: WO 2022/264898

(57) **Abstract**

A secondary battery management system associates a secondary battery with one or more securities, associates a security with an investor, associates a secondary battery with a user, and collects a use fee of a secondary battery from a user being a lessee of the secondary battery. The secondary battery management system transfers dividends based on the use fee of a secondary battery to investors that have bought securities of the secondary battery. When the lessee of a secondary battery has changed from a first user to a second user, the secondary battery management system collects the use fee of the secondary battery from the second user.

## Description

### Field

The present invention relates to a technology for managing distribution of secondary batteries.

### Background

The market of secondary batteries has been steadily growing. Secondary batteries have been used in a wide range of products such as electric vehicles (EVs), mobile terminals, power-assisted bicycles, and uninterruptible power supply systems. Secondary batteries are characteristic in being usable for a long term by repeating charge and discharge.

The race to develop secondary batteries is intensifying, and further progress is expected in degradation control of secondary batteries, that is, extension of the lives of secondary batteries. In addition, secondary batteries are said to produce high carbon dioxide emissions in the processes of search for resources to be used as materials, manufacture, recycling, and the like. Extension of the lives of secondary batteries is therefore desirable also in terms of environmental protection.

As the lives of secondary batteries have longer lives, distribution of secondary batteries is expected to become widespread. For example, a secondary battery may be used for primary use in a service EV of public transportation, and when the state of health (SOH) of the secondary battery has lowered by a certain degree, the secondary battery may be used for secondary use as a household storage battery by another user. In a case where the original energy density of a secondary battery is high, the secondary battery may sufficiently be used as a household storage battery even after some decrease in the SOH thereof. As a result of longer lives of secondary batteries, secondary use and tertiary use of secondary batteries in addition to primary use can be achieved (refer to Patent Literatures 1 and 2).

### Related Art List

### Patent Literatures

Patent Literature 1: WO 2019/131824
Patent Literature 2: JP 2020-126305 A

### Summary

### Technical Problem

There may be, however, some obstacles to widespread distribution of secondary batteries. Firstly, the expense for purchasing a secondary battery (initial cost) is significant for a user considering using a secondary battery for the first time. For example, a user may hesitate to purchase a secondary battery due to high initial cost, even though it is of high-performance and is therefore economically efficient in the long run. In particular, in a case where a primary user of a secondary battery considers selling it to a secondary user some time in the future instead of using it until the end of the battery life, the primary user may not want to bear the initial cost unless a resale price thereof can be foreseen.

In addition, it is difficult for a secondary user who wants to purchase a used secondary battery from a primary user to judge an appropriate price to buy such a secondary battery and which secondary battery and from which primary user to buy. This difficulty in the judgement is also a factor in preventing widespread distribution of secondary batteries.

The present invention has been achieved on the basis of recognition of the aforementioned problems, and a chief object thereof is to provide a technology for facilitating widespread distribution of secondary batteries.

### Solution to Problem

A secondary battery management device according to an embodiment of the present invention includes: a securities managing unit to associate a secondary battery with one or more securities; an investor managing unit to associate a security with an investor that has bought the security; a user managing unit to associate a secondary battery with a user being a lessee of the secondary battery; a fee collecting unit to collect a use fee of a secondary battery from a user being a lessee of the secondary battery; a dividend distributing unit to issue an instruction to transfer a dividend to an investor that has bought a security of a secondary battery, the dividend being based on the security; and a transmitting unit to transmit investment information to an external terminal.

The securities managing unit manages a security in association with investment information, and when an installation position of a secondary battery has changed from a first installation position to a second installation position, the securities managing unit changes registration of the installation position of the secondary battery from the first installation position to the second installation position in the investment information of the security associated with the secondary battery, and the transmitting unit transmits the investment information resulting from the change of registration to the external terminal.

A secondary battery management device according to another embodiment of the present invention includes: a securities managing unit to associate a secondary battery with one or more securities; an investor managing unit to associate a security with an investor that has bought the security; a user managing unit to associate a secondary battery with a user being a lessee of the secondary battery; a fee collecting unit to collect a use fee of a secondary battery from a user being a lessee of the secondary battery; and a dividend distributing unit to issue an instruction to transfer a dividend based on a security of a secondary battery to an investor that has bought the security.

When a first investor holding a security of a secondary battery has transferred the security to a second investor, the dividend distributing unit changes a recipient of a dividend based on the secondary battery from the first investor to the second investor.

A secondary battery management device according to another embodiment of the present invention includes: a securities managing unit to associate a secondary battery with one or more securities; an investor managing unit to associate a security with an investor that has bought the security; a user managing unit to associate a secondary battery with a user being a lessee of the secondary battery; a fee collecting unit to collect a use fee of a secondary battery from a user being a lessee of the secondary battery; and a dividend distributing unit to issue an instruction to transfer a dividend based on a security of a secondary battery to an investor that has bought the security.

When a lessee of a secondary battery has changed from a first user to a second user, the fee collecting unit changes the user from which a use fee of the secondary battery is collected from the first user to the second user.

A secondary battery management device according to another embodiment of the present invention includes: a fee collecting unit to collect a use fee of a secondary battery from a user being a lessee of the secondary battery; and a dividend distributing unit to transfer a dividend based on a security associated with the secondary battery to an investor that has bought the security.

When a first investor holding a security of a secondary battery has transferred the security to a second investor, the dividend distributing unit changes a recipient of a dividend based on the secondary battery from the first investor to the second investor.

### Advantageous Effects of Invention

The present invention facilitates widespread distribution of secondary batteries.

### Brief Description of Drawings

FIG. 1 is a schematic diagram illustrating the relation between users of secondary batteries and investors.
FIG. 2 is a conceptual diagram of a secondary battery management system.
FIG. 3 is a hardware configuration diagram of the secondary battery management system.
FIG. 4 is a hardware configuration diagram of a secondary battery management server.
FIG. 5 is a functional block diagram of the secondary battery management server, an investor terminal, and a user terminal.
FIG. 6 is a data structure table of secondary battery information.
FIG. 7 is a data structure table of battery possession information.
FIG. 8 is a data structure table of user information.
FIG. 9 is a data structure table of securities information.
FIG. 10 is a data structure table of investor information.
FIG. 11 is a data structure table of investment information.
FIG. 12 is a schematic graph for explaining determination of a sale price of battery securities.
FIG. 13 is a sequence diagram illustrating processes at issuance of battery securities.
FIG. 14 is a sequence diagram illustrating a process of payment of dividends.
FIG. 15 is a flowchart illustrating a process in S48 in FIG. 14 in detail.
FIG. 16 is a sequence diagram illustrating a process of buying and selling a battery security.
FIG. 17 is a sequence diagram illustrating a process of changing a lessee of a secondary battery.
FIG. 18 is a screen diagram of an investment screen.
FIG. 19 is a schematic graph for explaining a method for determining a use fee according to a modification.
FIG. 20 is a schematic diagram of a securities blockchain according to a modification.

### Description of Embodiments

A management company that is an owner of secondary batteries purchases secondary batteries from manufacturers. The secondary batteries are leased to users. The users pay fees for using the secondary batteries. Secondary batteries are therefore assets that bring in constant revenues.

A management company associates a secondary battery with one or more securities. The securities are sold to retail investors or institutional investors. Investors who have bought the securities receive dividends (income gain) based on the use fees for the secondary batteries paid by the users.

The burden of costs for introduction of secondary batteries are thinly and widely shared among a large number of investors through securitization. The fees for using secondary batteries are distributed to a large number of investors through securitization.

Secondary batteries can not only be used for primary use but also for secondary or tertiary use. For example, assume that a user A1 has used a secondary battery B1, the secondary battery B1 has degraded to a degradation level of 20[%], and the lessee of the secondary battery B1 is changed to a user A2. Thereafter, the user A2 pays the use fees.

Further assume that the user A2 has used the secondary battery B1, the secondary battery B1 has further degraded to a degradation level of 40[%], and the user to whom the secondary battery B1 is leased is changed to a user A3. Thereafter, the user A3 pays the use fees. Investors can constantly receive dividends based on the use fees from the user of each use, such as the users A1, A2, and A3.

EVs have a smaller number of components than gasoline cars, and the vehicle prices thereof are expected to become significantly lower. As the vehicle prices lower, the percentage of a secondary battery price in a vehicle price (the ratio of the price of a secondary battery to the price of the entire vehicle) becomes higher. The system of leasing a secondary battery and paying the use fees therefor instead of purchasing a secondary battery makes it easier for users to use EVs.

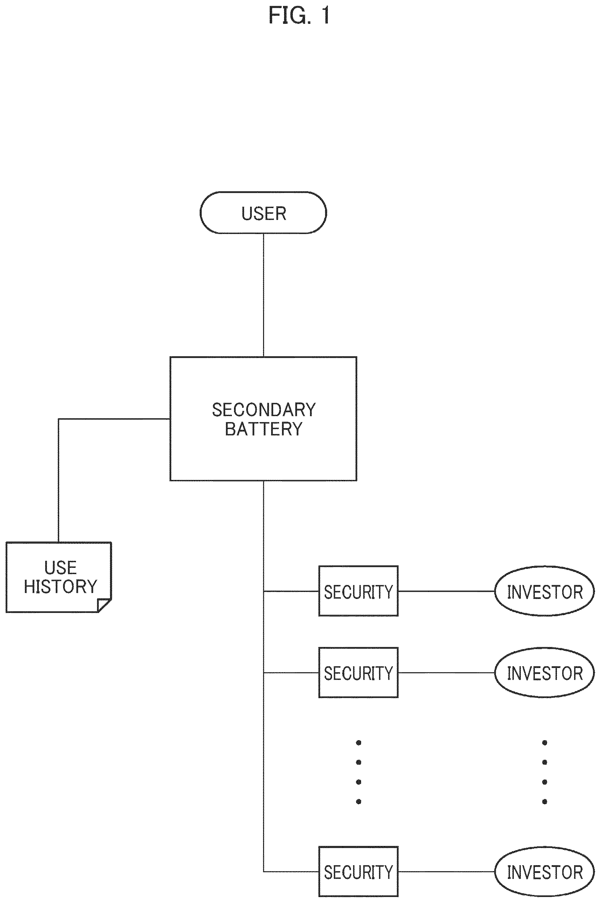

FIG. 1 is a schematic diagram illustrating the relation between users of secondary batteries and investors.

As described above, a secondary battery is supposed to be used by a plurality of users such as a primary user and a secondary user. The use history of a secondary battery is managed by a DI engine, which will be described later. Alternatively, a distributed ledger such as a blockchain may be used to manage the use histories. A computer (hereinafter referred to as a "DI engine") for battery management is mounted in a secondary battery. The DI engine registers and holds various data such as a user ID, discharge dates and times, charge dates and times, degradation levels (states of health: SOH), states of charge (SOC), discharge voltages, and temperatures. These data can be checked to trace the use history of the secondary battery.

Assume that the purchase price of a secondary battery is M [JPY]. The secondary battery is associated with the n securities. Assume, for example, that the sale price of the securities is D [JPY], and that all the n securities are sold. In this case, the management company that is the owner of the secondary battery can raise funds of D×n [JPY]. If D×n > M, the management company can make profits through securitization after purchasing the secondary battery.

The management company registers a user in association with investors for each secondary battery. In this manner, the user, the management company, and the investors are linked via the secondary battery.

The user pays the use fees of the secondary battery. Specifically, each time the degradation level of the secondary battery increases by 1[0], that is, each time the SOH decreases by 1[%], the user pays F [JPY]. In addition, the user pays G [JPY] per one battery charge. Assume that F > G. The number of times of battery charge and the degradation level are periodically counted or measured by the DI engine and recorded in the use history in the DI engine or the blockchain.

The use fees are distributed to the investors that bought the securities. This system has an aspect similar to a system of distributing rentals paid by real estate lessees to investors in a real estate investment trust (REIT) that has securitized real estates. The investors can buy securities of secondary batteries (hereinafter also referred to as "battery securities") just as they buy REIT securities.

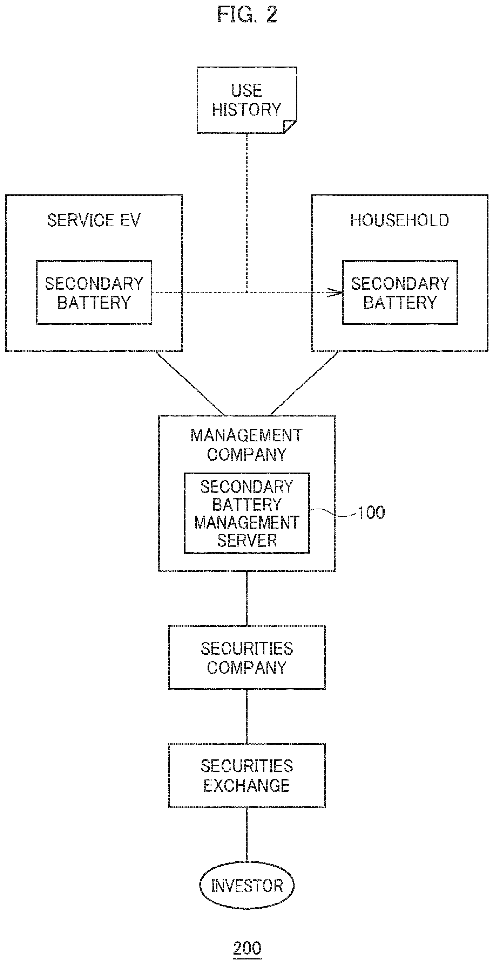

FIG. 2 is a conceptual diagram of a secondary battery management system 200.

The secondary battery management system 200 includes users, management companies, securities companies, investors, and a securities exchange. Each management company includes a secondary battery management server 100. A management company purchases a secondary battery from a manufacturer, and entrusts securitization of the secondary battery to a securities company. The battery securities are sold to the investors on the securities exchange. The investors buy the securities of the secondary battery.

The management company can immediately pass on the purchase expense of the secondary battery to the investors. The management company may purchase the secondary battery with a loan from a bank, instead of its own fund.

Assume that the secondary battery is used for primary use in a service EV. The value of the securities varies depending on where and by whom the secondary battery is used. The securities company determines the sale price of the securities depending on the usage of the secondary battery. This system has an aspect similar to the pricing of newly listed stocks. The sale price of popular battery securities is high, while it might be necessary to set a low sale price for unpopular battery securities needs to sell them out.

In the case of service EVs, assume that the secondary battery is used for primary use until the SOH thereof reaches 80[%] (the degradation level reaches 20[%]). When a use fee of F1 [JPY] per a degradation level of 1[0] is set, a primary use fee of F1×20 [JPY] based on the degradation level is paid. When a use fee of H1 [JPY] for a battery charge amount of 1 [kW] is set, the use fee based on battery charge is H1×m1 [JPY] in total, where m1 represents the battery charge amount.

If a primary user uses a secondary battery carefully, the secondary battery can be used for a long period until the degradation level thereof reaches 20[%], which results in a large battery charge amount in total. In other words, the primary use fee H1×m1 based on battery charge is high. The primary user can use the secondary battery over a long period without lowering the value of secondary battery, and the investors can receive the dividends over a long period. For a secondary battery that is expected to be used by such a good user, the price of the battery securities is high.

If a primary user does not use a secondary battery carefully, the secondary battery can only be used for a short period until the degradation level thereof reaches 20[%], which results in a low primary use fee H1×m1 based on battery charge. The primary user decreases the value of the secondary battery and can use the secondary battery only for a short period, and the investors can receive the dividends only for a short period. For a secondary battery that is expected to be used by such a primary user, the price of the battery securities is low.

Long-life secondary batteries can adequately be used as a household storage battery even after a degradation level of 20[%] is reached. A primary user transfers a used secondary battery to a secondary user. The lessee of the secondary battery is thus changed from the primary user to the secondary user. The secondary battery management server 100 changes the registration of the lessee of the secondary battery.

The investors can freely sell and buy the battery securities on a securities market. Each time a battery security is sold, the secondary battery management server 100 changes the ownership (investor) of the battery security. When a secondary battery is transferred from a primary user to a secondary user, the investors may sell the battery securities on a securities market or may continue holding the battery securities.

A primary user may directly transfer a secondary battery to a secondary user. When a transfer is made, the user ID is changed at the blockchain. In addition, the DI engine of the secondary battery informs the secondary battery management server 100 of the change of user. A secondary user may request transfer of a secondary battery from a primary user, or a primary user may offer transfer of a secondary battery to a secondary user. Alternatively, a management company may set a lessee, a lease period, and a lease condition of a secondary battery.

In the case of household storage batteries, assume that the secondary battery is used for secondary use until the SOH thereof reaches 40[%] starting from 80[%] (the degradation level reaches 60[%] starting from 20[%]). When a use fee of F2 [JPY] per a degradation level of 1[0] is set, a secondary use fee of F2×40 [JPY] in total based on the degradation level is paid. When a use fee of G2 [JPY] per one battery charge is set, the secondary use fee based on battery charge is G2×n2 [JPY], where n2 represents the number of times of battery charge.

The relations of F2<F1 and G2<G1 may be met. In this case, the dividends on the battery securities per unit period are likely to be lower for secondary use than for primary use. In secondary use, however, the use period (a period for a change in the degradation level by 40[%]) of the secondary battery is longer, and the period for which the dividends on the battery securities are received is therefore longer.

In a manner similar to the primary user, if a secondary user uses a secondary battery carefully and actively, the value of the battery securities is high. The value of the battery securities also varies depending on the use environment of the secondary battery. For example, degradation of a secondary battery installed at a place exposed to direct sunlight is likely to be accelerated. Protection of a secondary battery from direct sunlight extends the use period, which is advantageous to the user.

The value of battery securities also changes at the change from primary use to secondary use. In secondary use, because the secondary battery is secondhand, the value of the battery securities is lower than that at the beginning of primary use. The dividends, however, can continuously be obtained on the basis of the secondary battery in secondary use. If an investor buys the battery securities when the value of the battery securities has fallen sharply, the investor may get capital gain. In this manner, the battery securities not only bring stable income gain like bonds but also have the appeal of investment when acquisition of capital gain is targeted.

In cases of tertiary use and quaternary use, the value of battery securities gradually lowers. A secondary battery that originally has a high energy density, however, can be used over a long period even if the degradation level thereof has lowered. A present value of the battery securities may therefore turn out to be higher than expected. Such speculativeness of battery securities is expected to attract speculators to the market and activate battery securities trading. In addition, because the pace (frequency) of use of a secondary battery can be easily estimated, present value calculation by the Discounted Cash Flow (DCF) method appears to be easily applicable thereto.

Benefits achieved through securitization of a secondary battery from each of the viewpoints of a user, a management company, an investor, and a society are summarized below.

### 1. User

A user can use even an expensive and high-performance secondary battery by paying use fees therefor without the need to purchase it or take out a loan to purchase it. A user can check the use history (background) of a secondary batter with a DI engine or a blockchain, which encourages the user to introduce a secondhand secondary battery at ease.

By using a leased secondary battery carefully, a user can extend the period of the use of the secondary battery, which reduces the expense per unit period.

### 2. Management company

For a management company, a secondary battery can be a "moneymaking energy box". A management company can purchase a secondary battery and convert the secondary battery into assets through securitization. A management company may collect its operating budget from part of the use fees. In order to increase the value of battery securities, a management company wants to lease a secondary battery to a superior user. For this purpose, a management company may offer an incentive, such as reduction in use fee, to superior users. Because management companies need to compete in leasing with other management companies, an effect of encouraging management companies to find ways for acquisition of superior users can also be expected.

Furthermore, a management company can increase the value of battery securities as a secondary battery has a longer life and a higher versatility meeting the needs of various users. Thus, purchase of secondary batteries from superior manufacturers will be boosted, which can contribute to healthy competition for development. Because users of secondary batteries are managed by DI engines or a blockchain, a management company always knows who to charge the use fees even when secondary batteries are distributed among users. A management company may flexibly change the use fees depending on users of secondary batteries.

### 3. Investor

An investor can get income gain by buying battery securities. Because electricity is something we have to use every day, the income gain is likely to be stable. Because trading prices of battery securities fluctuate depending on usage of secondary batteries and different expectations involved, investors can enjoy the appeal of investment.

An investor may buy a plurality of kinds of battery securities. For example, a portfolio may be constructed by combining battery securities from which stable income gain is expected and battery securities from which capital gain is expected.

Battery securities may be grouped into tranches depending on risks or yields. Grouping of battery securities into tranches will allows the institutional investors to invest in battery securities at ease.

Typically, institutional investors often manage their risk through diversified investment to a plurality of financial instruments. It is known, however, that in a case where there is certain correlation between fluctuation in the price of a financial instrument A and that of a financial instrument B, the effect of diversified investment to the financial instruments A and B is diminished. Because battery securities are a new type of assets totally different from stocks, bonds, and real estate, including battery securities into a portfolio for diversified investment can be expected to be likely to produce the diversifying effect. This encourages large investors to consider including battery securities in their portfolios.

### 4. Society

Through investment behavior, users who use secondary batteries carefully will be highly evaluated in the market. The market will encourage good and proper use of secondary batteries.

When the capacity of a secondary battery mounted on one EV is assumed to be 50 [kWH], a million EVs alone produce an enormous power market of 50 [GWH]. Massive amounts of secondary batteries for such large electricity will discharge vast amounts of carbon dioxide when being disposed of or recycled. It will therefore be important to "use up long-life secondary batteries as much as possible". The secondary battery management system 200 will be able to significantly reduce the impact on environment through widespread distribution of secondary batteries responding to various needs of users.

A management company may set high use fees for poor-use users, and low use fees to good users. Part of the high use fees from poor-use users may be used to supplement the use fees of good users. Alternatively, the government may collect tax from part of the use fees of secondary batteries, and incentives may be paid to good users therefrom.

The technique of securitization by the secondary battery management system 200 can also be applied to things other than secondary batteries. For example, an EV itself may be securitized and leased, or parts such as a motor of an EV may be securitized and leased to a user.

Management of the use history of secondary batteries by a blockchain is not essential. DI engines attached to secondary batteries may record the use history, and the information may be exchanged between DI engines.

Each DI engine may periodically report the use history to the secondary battery management server 100. In this case, the secondary battery management server 100 may manage the use histories of a plurality of secondary batteries together.

Communication between DI engines or communication between a DI engine and the secondary battery management server 100 may incur communication fees. Communication fees may be paid by users to a management company, and all or part of the communication fees may be paid to investors as dividends. Alternatively, communication fees (information fees) may be paid by the management company to users.

In a case where a method in which communication fees (dividends) are paid by a user of a secondary battery to investors via a management company is adopted, the communication fees are periodically incurred even for a secondary battery that is not frequently used, and investors can therefore receive income gain more stably.

A management company purchases secondary batteries, and investors bear the cost for purchasing the secondary batteries. In this case, the battery securities may be financial instruments having the nature of debts (due bills) of the management company to the investors. In this case, the dividends of the battery securities have the meaning of repayment including interest from the management company.

A DI engine can recognize the power source when the secondary battery is charged. For example, a DI engine may recognize which of a plurality of power generation sources, such as nuclear power generation, thermal power generation, and photovoltaic power generation, and what percentage thereof is used to charge the secondary battery and record them as use history.

A DI engine may record the conditions under which the secondary battery is used, such as who uses it (the type of user) and for what it is used (the type of use), as use history. When decarbonized electric energy such as photovoltaic power generation is used, an attribute of "decarbonized" may be added to battery securities (hereinafter referred to as "environment-conscious battery securities"). Investors who want to support a decarbonized society may actively invest to environment-conscious battery securities. In addition, the government may apply preferential tax measures to environment-conscious battery securities in order to promote decarbonization. The preferential tax measures are expected to increase the value of environment-conscious battery securities.

Because service EVs are regularly operated, secondary batteries are used constantly. Thus, constant income of use fees is expected from secondary batteries used for service EVs. In contrast, personal EVs in urban areas are often used on weekends only, and stable income of use fees may not be expected from secondary batteries used therefor. In addition, repetition of rapid acceleration and deceleration is likely to accelerate degradation of secondary batteries. The values of secondary batteries thus vary depending on the users thereof. When buying battery securities, investors may make investment decision by referring to information on users of secondary batteries. A management company can control the values of battery securities by referring to information on users of secondary batteries and setting high use fees for users from which stable use fee income cannot be expected as described above and poor-use users that use secondary batteries in such a manner that is likely to accelerate degradation.

A management company may sell statistical information of use histories collected from DI engines of secondary batteries. For example, when part of statistical information is sold to investors, the investors can use the statistical information for investment decision. Alternatively, when part of statistical information is sold to a company that develops secondary batteries, the company can obtain useful guides in planning and development of secondary batteries.

A battery security includes the value of a secondary battery itself, and the value of battery cells used in the secondary battery. The value of a secondary battery itself also includes a value of recycling of the secondary battery. For example, a secondary battery containing much rare metal is highly valued. In addition, a secondary battery designed to be easy to recycle is considered to have a high residual value after being recycled. Such specification of secondary batteries is considered to be important for investment decision.

Hereinafter, the functions and the configuration of the secondary battery management system 200 according to the embodiment will be described in detail.

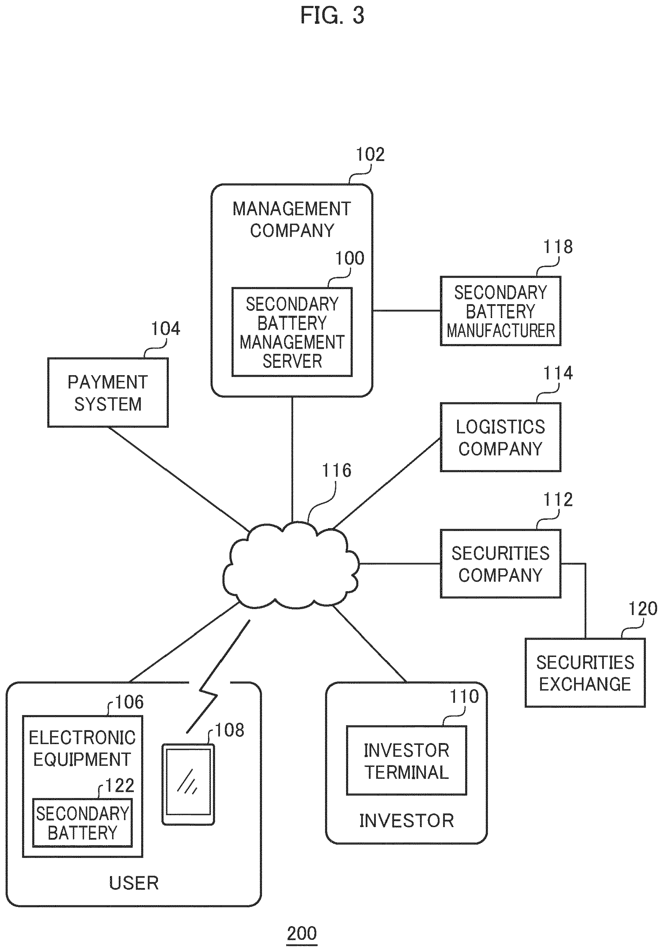

FIG. 3 is a hardware configuration diagram of the secondary battery management system 200.

In the secondary battery management system 200, the secondary battery management server 100 (secondary battery management device) operated by a management company 102, a payment system 104, an electronic equipment 106 and a user terminal 108 owned by a user, an investor terminal 110 owned by an investor, a securities company 112, and a logistics company 114 are connected with each other via the Internet 116. The management company 102 is connected with a secondary battery manufacturer 118 via a dedicated line. The securities company 112 is connected with a securities exchange 120 via a dedicated line.

The secondary battery manufacturer 118 manufactures secondary batteries 122. The management company 102 purchases the secondary batteries 122 from the secondary battery manufacturer 118. The management company 102 orders manufacture of secondary batteries 122 to the secondary battery manufacturer 118, and the secondary battery manufacturer 118 manufactures and delivers an ordered number of secondary batteries 122 to the management company 102. The secondary battery manufacturer 118 is therefore free from the risk on inventory of secondary batteries 122.

The management company 102 leases the secondary batteries 122 purchased from the secondary battery manufacturer 118 to various users. The secondary batteries 122 each include the aforementioned DI engine. The DI engine is constituted by an integrated circuit (IC) chip having a communication function and lightweight software. The electronic equipment 106 owned by the user is driven by a leased secondary battery 122. Examples of the electronic equipment 106 may include EVs, energy storage systems (ESSs), household electric appliances, watercrafts, laptop PCs, and portable power supplies. The electronic equipment 106 may be any device driven by a secondary battery 122. The management company 102 requests the securities company 112 to issue battery securities based on the purchased secondary batteries 122, which will be described later.

The payment system 104 is a system operated by a financial institution, and settles payments between users, management companies 102, and investors.

The user terminal 108 is a communication terminal used by the user. The user terminal 108 may be any communication terminal such as a smartphone or a laptop PC, but the user terminal 108 is assumed to be a smartphone in the description of the present embodiment. The user sends requests from the user terminal 108 to the secondary battery management server 100 to lease or return a secondary battery 122. The user performs user registration in the secondary battery management server 100 in advance. In user registration, the secondary battery management server 100 assigns a user ID (hereinafter referred to as a "PID") to the user.

The investor terminal 110 is a communication terminal used by an investor. The investor terminal 110 may also be any communication terminal, but is assumed to be a laptop PC in the description of the present embodiment. The investor sends buying orders and selling orders of battery securities from the investor terminal 110 to the securities company 112. The investor is identified by an investor ID (hereinafter referred to as an "IID").

The securities company 112 issues battery securities to the securities exchange 120 on the basis of a request from the management company 102. The securities company 112 also buys and sells battery securities in response to orders from the investors. The securities exchange 120 may be a typical financial instruments exchange, or a proprietary trading system (PTS).

The logistics company 114 delivers secondary batteries 122 to users in accordance with instructions from the management company 102.

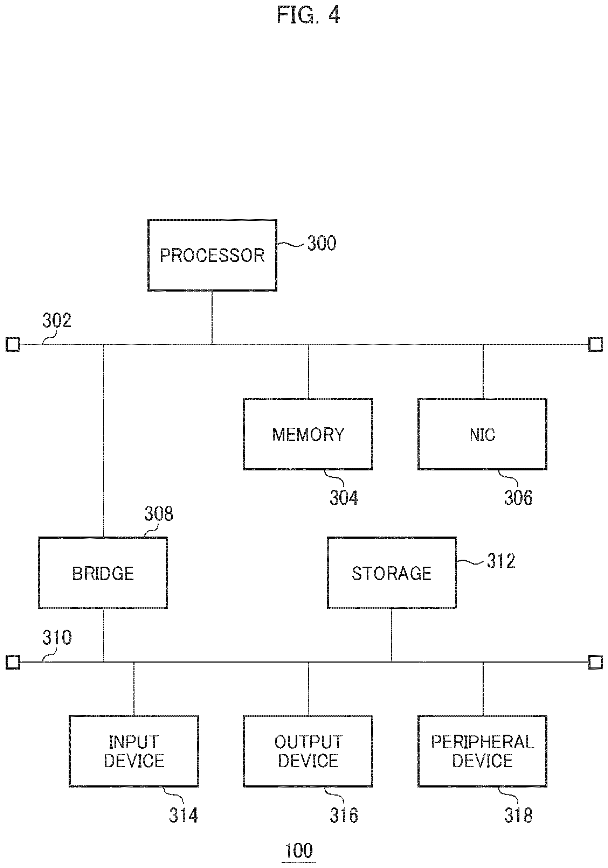

FIG. 4 is a hardware configuration diagram of the secondary battery management server 100.

The secondary battery management server 100 includes a storage 312 that is a nonvolatile memory for storing computer programs, a volatile memory 304 into which programs and data are loaded, a processor 300 (central processing unit: CPU) including a register, an arithmetic unit, an instruction decoder, and the like for reading and executing programs from the memory 304, and the like. The processor 300 is connected with a relatively high-speed first bus 302. The memory 304 and a network interface card (NIC) are connected with the first bus 302. In addition, other devices such as a graphics processing unit (GPU) may be connected with the first bus 302.

The first bus 302 is connected with a relatively low-speed second bus 310 via a bridge 308. The storage 312, and an output device 316 such as a monitor or a speaker are connected with the second bus 310. In addition, an input device 314 such as a mouse and a keyboard, and a peripheral device 318 such as a printer may be connected with the second bus 310.

Note that the user terminal 108 and the investor terminal 110 also have basically the same hardware configuration.

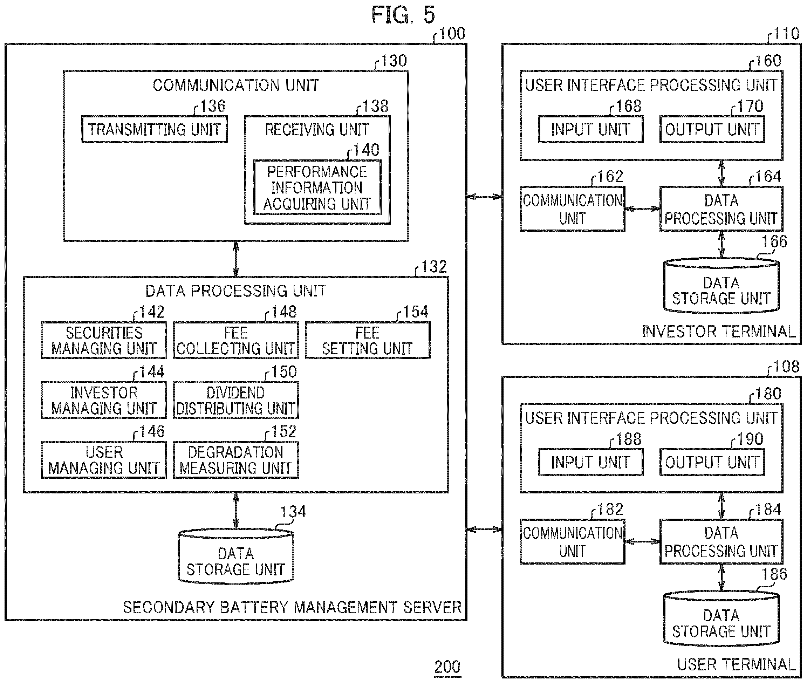

FIG. 5 is a functional block diagram of the secondary battery management server 100, the investor terminal 110, and the user terminal 108.

Respective components of the secondary battery management server 100, the investor terminal 110, and the user terminal 108 are implemented by hardware including arithmetic units such as CPUs and various co-processors, storage devices such as memories and storages, and wire or wireless communication lines connecting the components, and software, stored in the storage devices, for supplying processing instructions to the arithmetic units. Computer programs may be constituted by device drivers, an Operating System, various application programs on upper layers thereof, and libraries providing common functions to the programs.

The blocks described below are not in units of hardware but are in units of functions.

### [Secondary battery management server 100]

The secondary battery management server 100 includes a communication unit 130, a data processing unit 132, and a data storage unit 134.

The communication unit 130 performs processing for communication with external devices such as the investor terminal 110. The data storage unit 134 stores various information data. The data processing unit 132 performs various processes on the basis of data obtained by the communication unit 130 and data stored in the data storage unit 134. The data processing unit 132 also functions as an interface between the communication unit 130 and the data storage unit 134.

The communication unit 130 includes a transmitting unit 136 and a receiving unit 138.

The transmitting unit 136 transmits various data to external devices. The receiving unit 138 receives various data from external devices.

The receiving unit 138 includes a performance information acquiring unit 140.

The performance information acquiring unit 140 acquires "performance information" of each secondary battery 122 from the DI engine mounted in the secondary battery 122. The performance information refers to information indicating the performance and the usage of the secondary battery 122, such as nominal voltage, internal resistance, capacity, the number of times of battery charge, charging rate, temperature, and the type of the secondary battery 122.

The data processing unit 132 includes a securities managing unit 142, an investor managing unit 144, a user managing unit 146, a fee collecting unit 148, a dividend distributing unit 150, a degradation measuring unit 152, and a fee setting unit 154.

The securities managing unit 142 manages battery securities. The investor managing unit 144 manages information on investors. The user managing unit 146 manages information on users. The fee collecting unit 148 collects use fees of the secondary batteries 122 from users. In the present embodiment, a use fee is incurred when a user charges a secondary battery 122. The dividend distributing unit 150 pays dividends to investors. Part of the use fees is used as the operating budget of the management company 102. In the present embodiment, 5[%] of the use fees is used as the operating budget, and the remaining 95[%] thereof is used as dividends.

The degradation measuring unit 152 calculates the "degradation level" of each secondary battery 122 on the basis of the performance information. In the present embodiment, the degradation level is defined as degradation level [%] = 100 × (initial capacity - measured capacity) / initial capacity. The measured capacity refers to discharge capacity of a secondary battery as measured. The progress of degradation of a secondary battery 122 is expressed by the SOH as an index. The SOH represents a capacity maintenance rate, but may also be defined on the basis of the maintenance rate of internal resistance. The degradation level means "(100-SOH)[%]".

The fee setting unit 154 sets a use fee to be collected when a user charges a secondary battery 122.

### [Investor terminal 110]

The investor terminal 110 includes a user interface processing unit 160, a communication unit 162, a data processing unit 164, and a data storage unit 166.

The user interface processing unit 160 receives operations performed by investors through input devices such as a keyboard, a mouse, a joystick, and a touch panel, and performs processing relating to a user interface such as image display and audio output. The communication unit 162 performs processing for communication with the securities company 112 and the like. The data storage unit 166 stores various data. The data processing unit 164 performs various processes on the basis of input from the user interface processing unit 160, data received by the communication unit 162, and data stored in the data storage unit 166. The data processing unit 164 also functions as an interface between the communication unit 162, the user interface processing unit 160, and the data storage unit 166.

The user interface processing unit 160 includes an input unit 168 and an output unit 170.

The input unit 168 receives various inputs from investors. The output unit 170 outputs various information data to investors.

### [User terminal 108]

The user terminal 108 includes a user interface processing unit 180, a communication unit 182, a data processing unit 184, and a data storage unit 186.

The user interface processing unit 180 also receives operations performed by users through input devices, and performs processing relating to a user interface such as image display and audio output. The communication unit 182 performs processing for communication with the secondary battery management server 100 and the like. The data storage unit 186 stores various data. The data processing unit 184 performs various processes on the basis of input from the user interface processing unit 180, data received by the communication unit 182, and data stored in the data storage unit 186. The data processing unit 184 also functions as an interface between the communication unit 182, the user interface processing unit 180, and the data storage unit 186.

The user interface processing unit 180 includes an input unit 188 and an output unit 190.

The input unit 188 receives various inputs from users. The output unit 190 outputs various information data to users.

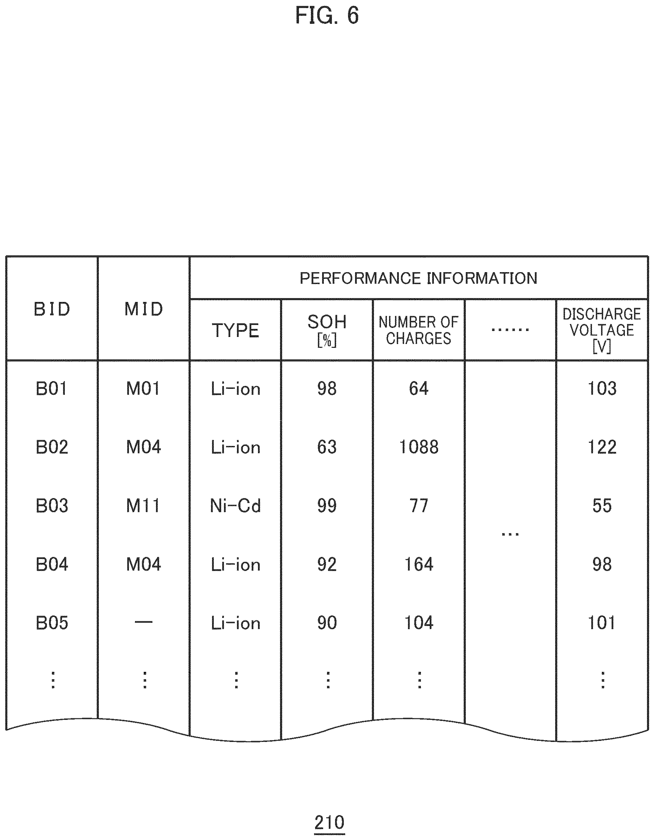

FIG. 6 is a data structure table of secondary battery information 210.

The secondary battery information 210 is stored in an internal memory of each DI engine. A secondary battery 122 is identified by a battery ID (hereinafter referred to as a "BID"). The electronic equipment 106 is identified by an equipment ID (hereinafter referred to as an "MID"). A secondary battery 122 with BID = B01 (hereinafter referred to as a "secondary battery 122 (B01)") is mounted in electronic equipment 106 (M01). The equipment ID indicates the installation position of the secondary battery.

The "installation position" of a secondary battery 122 may be information indicating the type of electronic equipment 106 in which the secondary battery 122 is mounted, that is, in other words, information indicating the application of the secondary battery 122. For example, assume that a secondary battery 122 is used for primary use in an EV, and thereafter used for secondary use in an ESS. In this case, the type of electronic equipment 106 such as an EV and an ESS, that is, the use of the secondary battery 122 may be regarded as the "installation position" of the secondary battery 122.

Different pieces of electronic equipment 106, even of the same type, may be regarded as being at different "installation positions" from each other. For example, in a case where a secondary battery (B01) is used in an EV (electronic equipment 106) and thereafter used in another EV, the installation position of the secondary battery (B01) may be regarded as being changed.

As described above, in the description of the present embodiment, the equipment ID is assumed to be information indicating the "installation position" of a secondary battery.

Each secondary battery 122 is associated with performance information. The performance information includes various information data indicating the performance or the usage of the secondary battery 122, such as SOH, the number of times of battery charge, and discharge voltage. For example, the secondary battery 122 (B01) is a lithium ion secondary battery (Li-ion) with an SOH of 98[%]. In other words, the degradation level of the secondary battery 122 (B01) is 2[%].

Each DI engine acquires various performance information data on the secondary battery 122 periodically or at each battery charge. Other examples of the performance information may include various data based on the specification of measured values, such as energy density, charge/discharge efficiency, self-discharge rate, weight, the life-time number of charge and discharge cycles, service life, and the name of the secondary battery manufacturer 118. The performance information is important information for investors to determine whether or not to invest to battery securities. Each DI engine automatically transmits the performance information to the secondary battery management server 100.

According to the secondary battery information 210, the secondary battery 122 (B01) is mounted in the electronic equipment 106 (M01), but a secondary battery 122 (B05) is not mounted in any electronic equipment 106.
Thus, the secondary battery 122 (B05) is in an unused state.

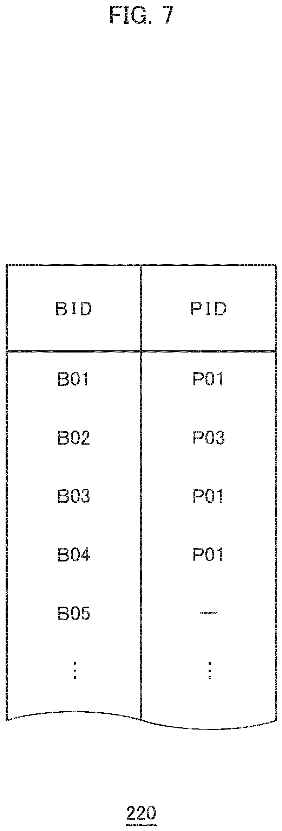

FIG. 7 is a data structure table of battery possession information 220.

The battery possession information 220 is stored in the data storage unit 134 of the secondary battery management server 100. When a secondary battery 122 is leased to a user, the user managing unit 146 associates the BID of the leased secondary battery 122 with the PID of the user that is the lessee in the battery possession information 220.

According to the battery possession information 220, the secondary battery 122 (B01) is leased to the user (P01). In addition, the secondary battery 122 (B05) in the unused state is not associated with any user. The users may be individuals or legal entities. For example, a logistics corporation that uses EVs, an electric power company that operates a power plant using ESSs, and the like can also be corporate users.

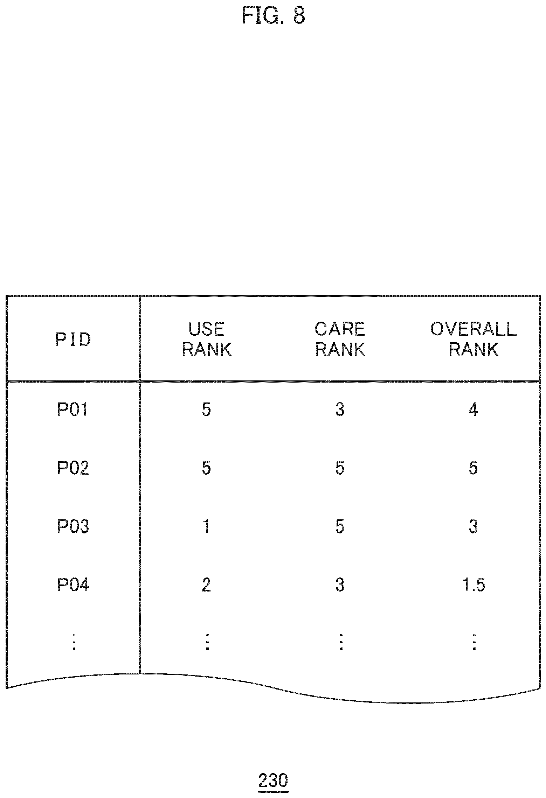

FIG. 8 is a data structure table of user information 230.

The user information 230 is stored in the data storage unit 134 of the secondary battery management server 100. The user information 230 is information indicating attributes of users. A use rank, a care rank, and an overall rank are set for each user. When a user charges a secondary battery 122, the DI engine of the secondary battery 122 notifies the secondary battery management server 100 that the secondary battery 122 has been charged. At this point, a use fee is incurred to the user. In the following description, a user is assumed to pay G [JPY] for each battery charge. For simplicity of explanation, the other factors such as the amount of charge are not considered in determination of a use fee.

The more actively a user uses a secondary battery 122, or in other words, the more times a secondary battery 122 is charged, the more use fees the management company 102 can collect from the user. A user that pays much use fees is favorable to investors.

The use rank indicates how actively a user uses a secondary battery 122. In the present embodiment, the user managing unit 146 aggregates the number of times of charging a secondary battery 122 per month (unit period) of each of a large number of users. The user managing unit 146 calculates a standard deviation of each user on the basis of averages and variances of the numbers of times of battery charge.

The user managing unit 146 sets the use rank of users in the top 5[%] to "5", the use rank of users between 5[%] and 20[%] from the top to "4", the use rank of users between 20[%] and 50[%] from the top to "3", the use rank of users between 50[%] and 70[%] from the top to "2", and the use rank of users in more than 70[%] from the top to "1". For example, because the number of times of charging the secondary battery 122 of the user (P01) is as large as ranking in the top 5[%], the use rank of the user (P01) is "5". In contrast, because the number of times of charging the secondary battery 122 of the user (P03) does not rank even in 70[%] from the top, the use rank of the user (P03) is "1".

The more carefully a user uses a secondary battery 122, or in other words, the more slowly a secondary battery 122 degrades, the longer the period during which the management company 102 can collect use fees from the user. A user that pays use fees over a long period is also favorable to investors.

The care rank indicates how carefully a user uses a secondary battery 122. In the present embodiment, the user managing unit 146 takes statistics of the amounts of change in the degradation level (hereinafter referred to as "degradation progression degrees") of secondary batteries 122 per month (unit period) of a large number of users. The user managing unit 146 sets the care rank of the degradation progression degree, which is higher as the degradation processing degree is smaller (as a secondary battery is less easily degraded), in the top 5[%] to "5", the care rank of the degradation progression degree between 5[%] and 20[%] from the top to "4", the care rank of the degradation progression degree between 20[%] and 50[%] from the top to "3", the care rank of the degradation progression degree between 50[%] and 70[%] from the top to "2", and the care rank of the degradation progression degree in more than 70[%] from the top to "1".

For example, because the degradation progression degree of the secondary battery 122 used by the user (P01) last month is in a zone of 20 to 50[%] from the top, the care rank thereof is "3".

The overall rank is determined on the basis of the use rank and the care rank. The user managing unit 146 determines the overall rank by a monotonically increasing function of the use rank and the care rank as variables.
In the present embodiment, the user managing unit 146 calculates the mean value of the use rank and the care rank as the overall rank.

The user information 230 may also include various user attributes such as name, age, sex, address, account number, and email address of each user.

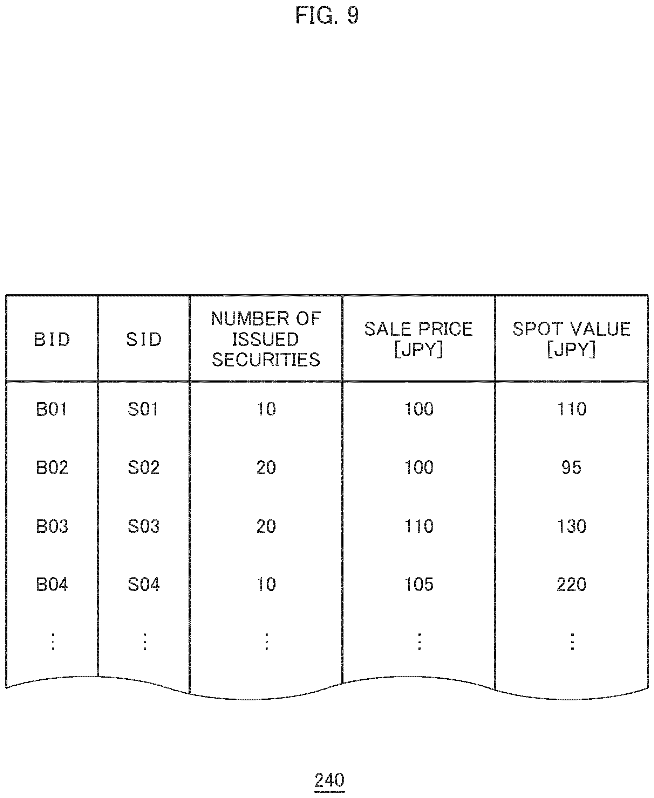

FIG. 9 is a data structure table of securities information 240.

The securities information 240 is stored in the data storage unit 134 of the secondary battery management server 100. A battery security is identified by a securities ID (hereinafter referred to as an "SID"). Each secondary battery 122 is associated with one or more battery securities. According to the securities information 240 illustrated in FIG. 9, ten battery securities (S01) are issued for a secondary battery 122 (B01). The sale price (offering price) of the battery securities (S01) is 100 [JPY], and the spot value thereof is 110 [JPY]. Thus, an investor who bought the battery securities (S01) at the sale price has an unrealized gain of 10 [JPY]. The battery securities (S01) will be referred to as battery security (S01:1) to battery security (S01:10) when the ten battery securities (S01) are to be distinguished from each other.

Methods for determining a sale price and a spot value of battery securities will be described later.

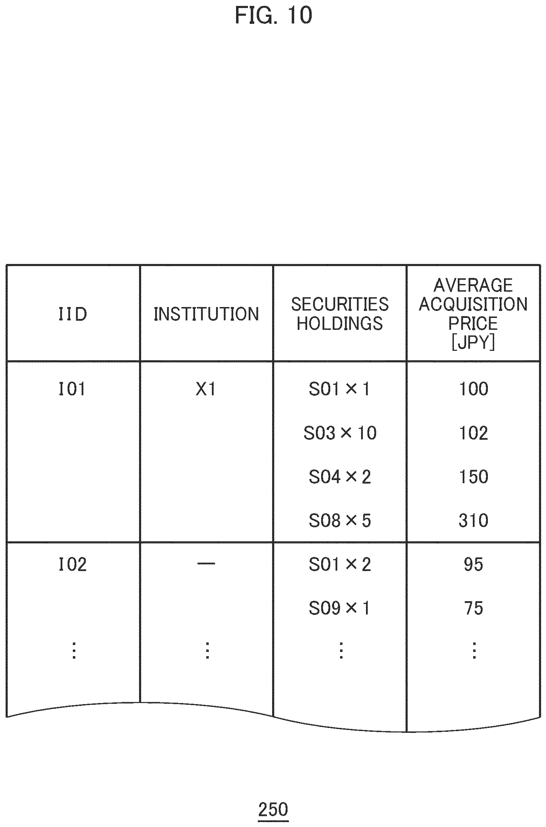

FIG. 10 is a data structure table of investor information 250.

The investor information 250 is stored in the data storage unit 134 of the secondary battery management server 100. The investor information 250 is information indicating a held status (a status of possession) of battery securities. According to the investor information 250, an investor (I01) is a company X1. Thus, the investor (I01) is an institutional investor. Examples of institutional investors include financial institutions such as an insurance company, a pension management company, and an investment bank, educational institutions such as a university, and a business corporation. In contrast, an investor (I02) is a retail investor.

The investor (I01) holds one battery security (S01), ten battery securities (S03), two battery securities (S04), and five battery securities (S08). In addition, the investor (I01) has acquired the battery securities (S03) at an average price of 102 [JPY]. According to the securities information 240 illustrated in FIG. 9, because the spot value of the battery securities (S03) is 130 [JPY], the investor (I01) has an unrealized gain for the battery securities (S03).

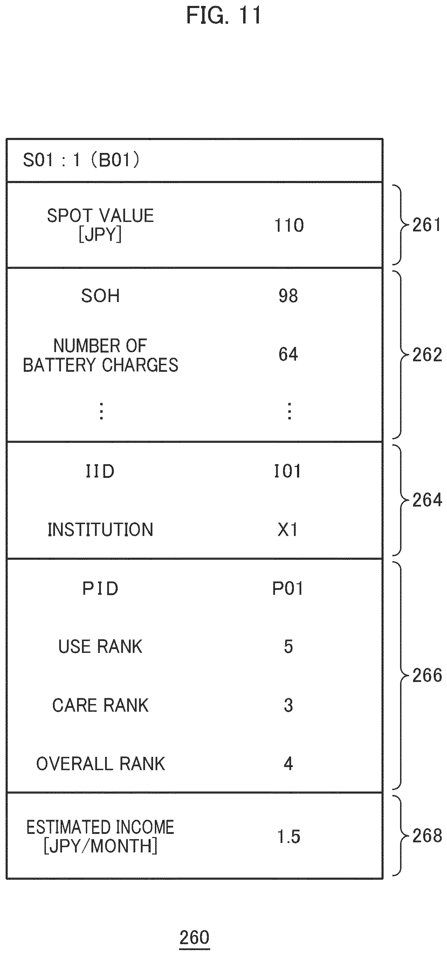

FIG. 11 is a data structure table of investment information 260.

The investment information 260 is stored in the data storage unit 134 of the secondary battery management server 100. The securities managing unit 142 generates the investment information 260 on the basis of the secondary battery information 210, the battery possession information 220, the user information 230, and the securities information 240. FIG. 11 illustrates the investment information 260 of the battery security (S01:1) associated with the secondary battery 122 (B01).

The investment information 260 includes a spot value field 261, a performance information field 262, an investor information field 264, a user information field 266, and an estimated income field 268.

The securities managing unit 142 records a spot value of the battery securities (S01) in the spot value field 261. The securities managing unit 142 records all or part of the secondary battery information 210 of the secondary batteries 122 (see FIG. 6) in the performance information field 262, part of the investor information 250 (FIG. 10) in the investor information field 264, and all or part of the user information 230 (see FIG. 8) in the user information field 266. In addition, although not illustrated, the investment information 260 may include information indicating the installation position (equipment ID) of the secondary battery 122 (B01).

The securities managing unit 142 calculates an estimated income per month from the battery securities (S01) on the basis of the record of dividend income from the secondary battery 122 (B01) during a certain past period, and records the calculated estimated income in the estimated income field 268. For example, when the secondary battery 122 (B01) has yielded a dividend of 1.5 [JPY] per month on average during the past year, the securities managing unit 142 may calculate the estimated income to be 1.5 [JPY].

Alternatively, the securities managing unit 142 may calculate an expected future income on the basis of the record of dividend income during a certain past period, and calculate the present value of the battery securities by the DCF method. The securities managing unit 142 may compare the present value calculated by the DCF method with the spot value (trading price), and register whether the battery securities (S01) are undervalued, fairly valued, or overvalued in the investment information 260.

The investment information 260 is generated for each battery security. The transmitting unit 136 of the secondary battery management server 100 transmits the investment information 260 to the securities company 112 as necessary. The securities company 112 provides opportunities for sale and purchase of battery securities to investors, and at this point, also provides the investment information 260 of the battery securities to the investors. Note that, some information, such as the investor information field 264, may be excluded from the information provided to the investors.

When there is a change in the investment information 260, the transmitting unit 136 of the secondary battery management server 100 transmits the investment information 260 resulting from the change to the securities company 112, and the securities company 112 thus provides the latest investment information 260 to the investors.
For example, when the electronic equipment 106 in which the secondary battery (B01) is mounted is changed, the securities managing unit 142 changes registration of the equipment ID (installation position) included in the investment information 260. The transmitting unit 136 transmits the investment information resulting from the change to the securities company 112.

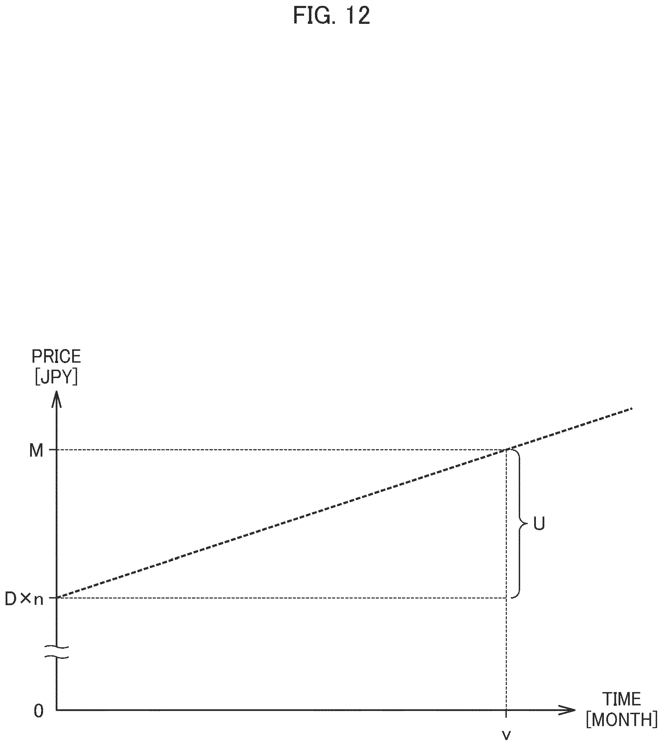

FIG. 12 is a schematic graph for explaining determination of a sale price of battery securities.

After purchasing a secondary battery 122 from the secondary battery manufacturer 118, the management company 102 requests the securities company 112 to issue battery securities. When issuing new battery securities, the management company 102 determines the sale price of the battery securities. The sale price of battery securities may be determined in any manner. In the present embodiment, the secondary battery management server 100 determines the sale price on the basis of an algorithm below.

In FIG. 12, the horizontal axis represents time, and the vertical axis represents income of the management company 102. In the description, assume that the secondary battery 122 is purchased at a time point represented by the origin, and immediately leased to a certain user. For simplicity of explanation, unused periods are not considered in FIG. 12.

Assume that the purchase price at which management company 102 has bought the secondary battery 122 from the secondary battery manufacturer 118 is M [JPY]. Also assume that n battery securities are issued for the secondary battery 122. Assume that the sale price of one battery security in this case is D [JPY]. The management company 102 can therefore get an income of D×n [JPY] from the securities company 112 by purchasing the secondary battery 122 at M [JPY] and issuing n battery securities each at D [JPY]. Herein, assume that M > D×n. In this case, the management company 102 incurs a loss of U = M-D×n [JPY] when the battery securities are issued, but can collect part of the use fees of the secondary battery 122 as its operating budget. A lower sale price is more advantageous in attracting investment. The management company 102 therefore controls the sale price and recovers the shortfall with part of the use fees of the secondary battery 122.

Herein, the management company 102 sets a goal of recovering the shortfall of U [JPY] as its operating budget v months after issuance of the battery securities. Assume that a use fee obtained when the secondary battery 122 is charged once is G [JPY]. In the present embodiment, when a use fee of G [JPY] is incurred, k×G [JPY] is the operating budget of the management company 102, and the remaining (1-k)×G [JPY] is dividends to investors (0≤k≤1). As described above, k is 5[%] in the present embodiment.

When an estimated number of times of battery charge per month is c [times], an operating budget of k×G×c [JPY] per month can be assumed to be collected from the secondary battery 122. In order to recover the shortfall of U [JPY] in v months, the sale price D [JPY] is determined so that M-D×n = k×G×c×v is satisfied.

In this equation, M is known, and G, n, v, and k are any set values. The securities managing unit 142 determines c (the estimated number of times of battery charge per month) on the basis of the past record of charges of the secondary battery 122. For example, when the average number of times of battery charge per month of a secondary battery 122b, which is the same type as and having the same charging capacity as the secondary battery 122a for which new battery securities are to be issued, is 30 [times], the securities managing unit 142 may set to c=30.

As a result of determining the sale price D [JPY] by the equation above, the management company 102 can expect recovery of the initial cost in v months while issuing the battery securities at a low price. If it goes as expected, the management company 102 can include all the operating budgets after v months in its income.

In practice, the number of times of battery charge per month may vary depending on the usage of the secondary battery 122. Thus, the uncertainty in the number of times of battery charge, that is, the uncertainty in dividends produces the appeal of investment in battery securities.

The secondary battery manufacturer 118 manufactures a secondary battery 122 ordered from the management company 102 on a made-to-order basis, and is therefore free from inventory risk. If no lessee of the secondary battery 122 is found, the secondary battery 122 is an inventory carried by the management company 102, and the management company 102 therefore bears the inventory risk. After purchasing the secondary battery 122 from the secondary battery manufacturer 118, however, the management company 102 can recover part or all of the purchase cost in a short period by issuing the battery securities, and can therefore distribute the risk to a number of investors. In addition, if the secondary battery 122 can be leased over a long period, the management company 102 can constantly earn revenue from the use fees of the secondary battery 122.

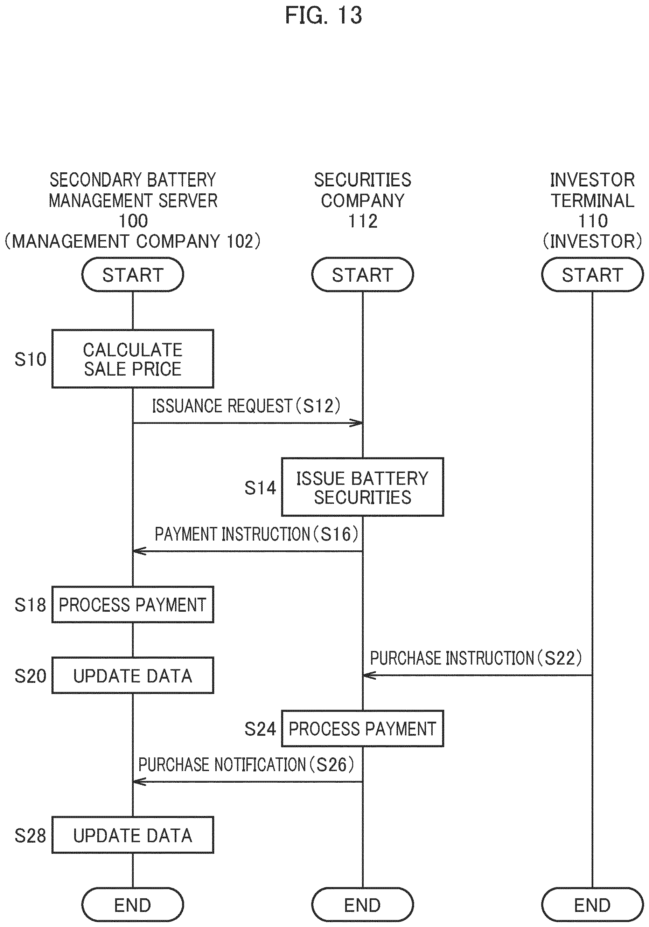

FIG. 13 is a sequence diagram illustrating processes at issuance of battery securities.

The management company 102 first purchases a secondary battery 122 from the secondary battery manufacturer 118. At this point, the securities managing unit 142 calculates a sale price on the basis of the purchase price by the method explained with reference to FIG. 12 (S10). The transmitting unit 136 transmits, to the securities company 112, a request for issuing battery securities (S12). The issuance request includes the investment information 260 on the battery securities, the sale price, and the number of battery securities to be issued.

The securities company 112 newly issues the specified number of battery securities to the securities exchange 120 in accordance with an instruction from the secondary battery management server 100 (S14). In this process, the securities company 112 provides an instruction to pay an issuance fee of (sale price) × (specified number) to the management company 102 (S16). More specifically, the securities company 112 instructs the secondary battery management server 100 to pay the issuance fee, and the secondary battery management server 100 instructs the payment system 104 to deduct the issuance fee from the account of the securities company 112 and transfer the fee to the account of the management company 102 (S18). After the issuance of battery securities, the securities managing unit 142 updates various data of the secondary battery information 210, the securities information 240, and the like (S20).

An investor transmits a purchase instruction to buy a newly issued battery security from the investor terminal 110 to the securities company 112 (S22). The securities company 112 instructs the payment system 104 to carry out a payment process (S24). Specifically, the payment system 104 deducts the purchase price from the account of the investor and transfers the deducted amount to the account of the securities company 112. After the payment, the securities company 112 transmits a purchase notification to the secondary battery management server 100 (S26). The purchase notification includes the SID of the battery security, the IID of the investor that has bought the battery security, the trading price, and the like. After receiving the purchase notification, the securities managing unit 142 updates various data of the securities information 240, the investor information 250, and the like (S28).

Thereafter, when a user requests the secondary battery management server 100 to lease the secondary battery 122, the transmitting unit 136 of the secondary battery management server 100 instructs the logistics company 114 to deliver the secondary battery 122. The delivery instruction in this process includes the address of the user, the BID of the secondary battery 122 to be leased, and the like.

The logistics company 114 delivers the secondary battery 122 owned by the management company 102 to the user in accordance with the delivery instruction. Upon delivery of the secondary battery 122, the user managing unit 146 updates various data of the battery possession information 220 and the like to associates the secondary battery 122 with the user that is the lessee.

The DI engine mounted in the secondary battery 122 measures the state of the secondary battery 122 as appropriate, and transmits the performance information to the secondary battery management server 100. The DI engine also reads the MID of the electronic equipment 106 in which the secondary battery 122 is mounted, and also transmits the MID with the BID to the secondary battery management server 100. When the MID is received, the user managing unit 146 updates the secondary battery information 210.

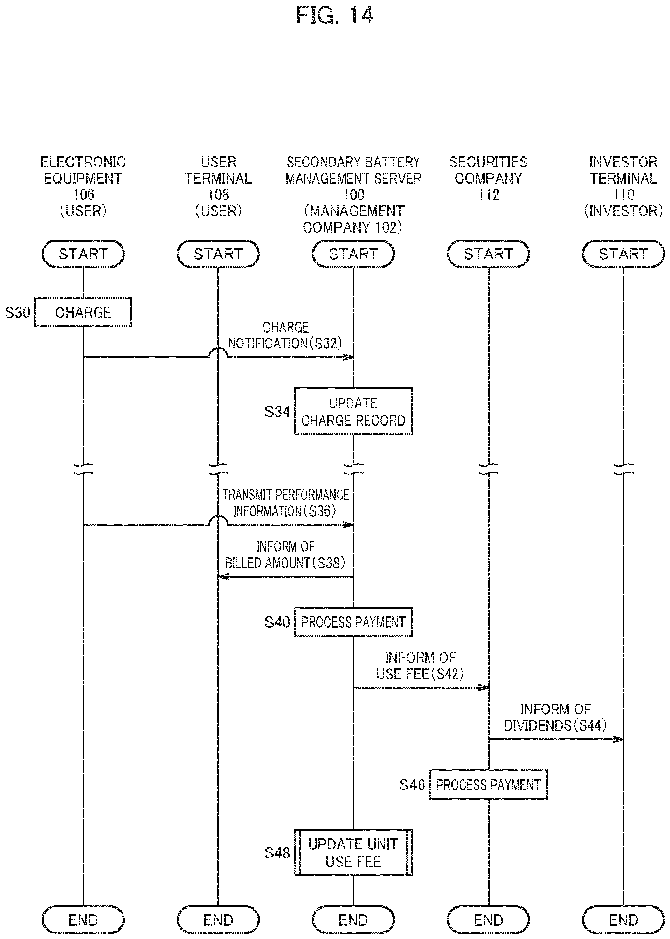

FIG. 14 is a sequence diagram illustrating a process of payment of dividends.

In the description herein, assume a case where a user (P01) charges a secondary battery 122 (B01). The user (P01) charges the secondary battery 122 (B01) at a battery charging station (S30). The DI engine of the secondary battery 122 (B01) transmits a charge notification to the secondary battery management server 100 (S32). The charge notification includes the BID, the PID, and the like.

The fee collecting unit 148 of the secondary battery management server 100 manages past charge record information (not illustrated) indicating when each secondary battery 122 was charged. In the past charge record information, each BID is associated with charge dates and times. Upon receiving the charge notification, the fee collecting unit 148 updates the past charge record information (S34). The fee collecting unit 148 updates the past charge record information each time a charge notification is received.

On a predetermined due date (hereinafter referred to as "settlement date") during a lease period, such as the 25th of each month, the DI engine transmits the latest performance information of the secondary battery 122 to the secondary battery management server 100 (S36). The fee collecting unit 148 calculates the use fee on the basis of the number of times of battery charge from the previous settlement date to the current settlement date. For example, when the number of times of battery charge is n, the use fee per one battery charge (hereinafter referred to as a "unit use fee" so that the use fee per one battery charge is distinguished from the total use fee for a month) is G [JPY], the use fee for the month is G×n [JPY]. The unit use fee G [JPY] is determined in advance for each secondary battery 122. The transmitting unit 136 notifies the user terminal 108 of the total use fee G×n (S38). The user can check the use fee per month anytime by using the user terminal 108.

The fee collecting unit 148 instructs the payment system 104 to pay the use fee G×n [JPY] (S40). The use fee is deducted from the account of the user (P01) and transferred to the account of the management company 102. The secondary battery management server 100 notifies the securities company 112 of the use fee (S42). The securities company 112 notifies the investor terminal 110 of (1-k)×G×n of the use fee as a dividend (S44). The securities company 112 instructs the payment system 104 to perform the payment process by transferring part of the use fee transferred to the management company 102 as a dividend to the account of the investor (S46). As described above, part of the use fee paid by the user (P01) is used as an operating budget of the management company 102, and the rest thereof is a dividend to the investor.

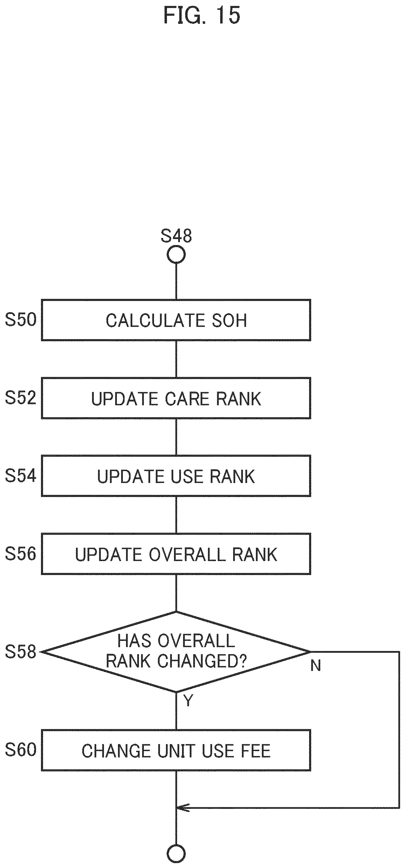

After collection of the use fee, the secondary battery management server 100 further revises the unit use fee as necessary (S48). The revision of the unit use fee will be described in detail with reference to FIG. 15.

FIG. 15 is a flowchart illustrating the process in S48 in FIG. 14 in detail.

The degradation measuring unit 152 calculates the SOH of the secondary battery 122 on the basis of the performance information obtained on the settlement date (S50). The degradation measuring unit 152 also calculates the degradation progression degree for the unit period from the previous settlement date to the current settlement date. The user managing unit 146 updates the care rank on the basis of the degradation progression degree (S52).

Subsequently, the user managing unit 146 updates the use rank on the basis of the past charge record information (S54). The user managing unit 146 updates the overall rank on the basis of the care rank and the use rank (S56). If the overall rank has not changed from the previous overall rank (N in S58), the subsequent process is skipped. If the overall rank has changed (Y in S58), the fee setting unit 154 changes the unit use fee (S60).

Specifically, if the overall rank is 1 or lower, the fee setting unit 154 increases the unit use fee by 50[%] from a basic fee. If the overall rank is between 1 and 2, the fee setting unit 154 increases the unit use fee by 10[%] from the basic fee. If the overall rank is between 2 and 3, the fee setting unit 154 sets the unit use fee to the basic fee. If the overall rank is between 3 and 4, the fee setting unit 154 decreases the unit use fee by 10[%] from the basic fee. If the overall rank is higher than 4, the fee setting unit 154 decreases the unit use fee by 50[%] from the basic fee.

For example, assume that the basic fee of the use fee of the secondary battery 122 (B01) for the user (P01) is 20 [JPY], and that the user (P01) charged the secondary battery 122 (B01) 20 time in a month. The use fee that is the basis of revision is 400 [JPY]. If the overall rank of the user (P01) is "1", the unit use fee is 30 [JPY] and the use fee for the month is therefore 600 [JPY]. If the overall ran of the user (P01) is "4.5", the unit use fee is 10 [JPY] and the use fee for the month is therefore 200 [JPY]. In this manner, the more actively and the more carefully the user (P01) uses the secondary battery 122 (B01) in such a manner that the secondary battery 122 (B01) will be less degraded, the more benefits the user (P01) can receive in the use fee.

Note that one user may use a plurality of secondary batteries 122. In this case, the user managing unit 146 may calculate the care rank, the use rank, and the overall rank for each of the secondary batteries 122. Alternatively, the user managing unit 146 may calculate an average of care ranks calculated for the respective secondary batteries 122 as the care rank of the user.

For example, assume that a user (P01) possesses a secondary battery 122 (B01), a secondary battery 122 (B21), and a secondary battery 122 (B22). The user managing unit 146 calculates the care rank of the user (P01) for the secondary battery 122 (B01) to be "3". Similarly, also assume that the care ranks for the secondary battery 122 (B21) and the secondary battery 122 (B22) to be "4" and "5", respectively. In this case, the user managing unit 146 may calculate the care rank of the user (P01) to be an average thereof, that is, 4 (= (3+4+5)/3). The user managing unit 146 may calculate the use rank and the overall rank of the user (P01) in a similar manner.

In the example described above, the use rank is calculated on the basis of the number of times of battery charge from the previous settlement date to the current settlement date, and the unit use fee changes depending on the use rank. Alternatively, for example, the user managing unit 146 may update the use rank depending on the total charge amount from the previous settlement date to the current settlement date. The user managing unit 146 may set a higher use rank as the total charge amount is larger. The fee setting unit 154 may change the unit use fee depending the use rank calculated on the basis of the total charge amount.

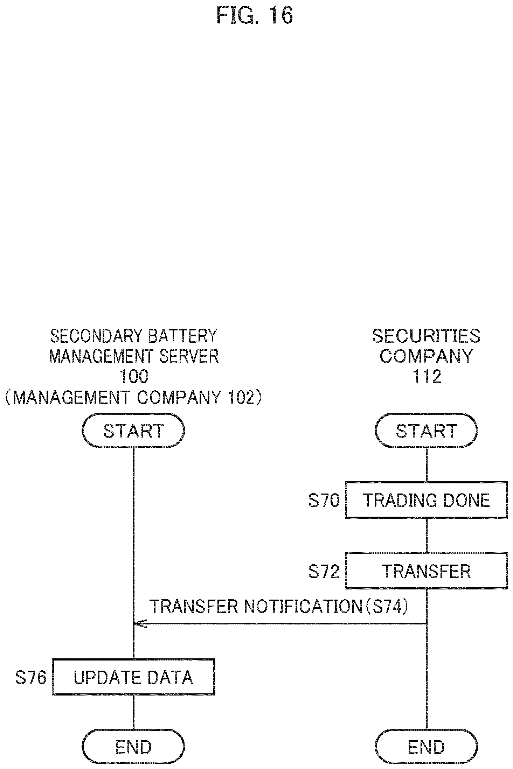

FIG. 16 is a sequence diagram illustrating a process of buying and selling a battery security.

When an investor (I01) issues a selling order of a battery security and an investor (I02) issues a buying order of the battery security, the securities company 112 determines whether or not the trading has been done in the same manner as a normal stock transaction. If the trading has been done (S70), the securities company 112 transfers the holder of the battery security from the investor (I01) to the investor (I02) (S72).

After completion of the transfer, the securities company 112 transmits a transfer notification including the SID of the battery security that has been sold and bought and the IIDs of the investors involved in the trading to the secondary battery management server 100 (S74). The investor managing unit 144 updates data of the securities information 240 and the like in accordance with the transfer notification (S76).

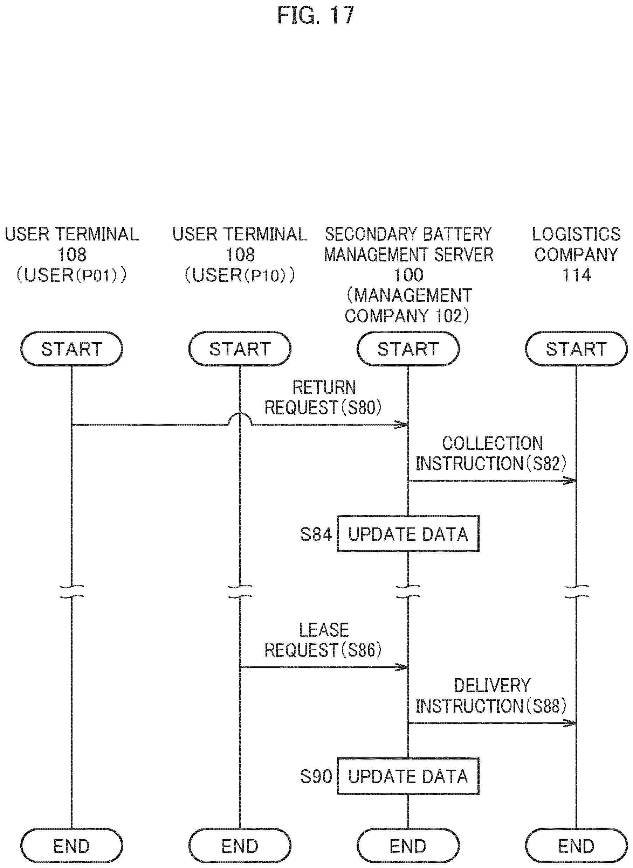

FIG. 17 is a sequence diagram illustrating a process of changing a lessee of a secondary battery 122.

In the description herein, assume that the user (P01) has returned the secondary battery 122 (B01), which is then leased to another user (P10). The user (P01) operates the user terminal 108 to provide an instruction to return the secondary battery 122 (B01). In this process, the input unit 188 of the user terminal 108 receives the return instruction, and the communication unit 182 transmits the return instruction to the secondary battery management server 100 (S80). The return instruction includes the BID (= B01) and the PID (= P01).

The transmitting unit 136 of the secondary battery management server 100 transmits an instruction to the logistics company 114 to collect the secondary battery 122 (S82). The collection instruction includes the PID and the address of the user (P01), and the BID of the secondary battery 122 (B01) to be collected. The logistics company 114 collects the secondary battery 122 (B01) from the user (P01), and delivers the secondary battery 122 (B01) to a warehouse of the management company 102. Thus, the secondary battery 122 (B01) temporarily resides in the inventory of the management company 102. The user managing unit 146 updates data of the secondary battery information 210, the battery possession information 220, and the like (S84).

Subsequently, assume that the user (P10) requests a lease of the secondary battery 122 (B01). The input unit 188 of the user terminal 108 receives the lease request, and the communication unit 182 transmits the lease request to the secondary battery management server 100 (S86). The lease instruction includes the BID (= B01) and the PID (= P10).

The secondary battery management server 100 transmits a delivery instruction to the logistics company 114 (S88). The delivery instruction includes the BID of the secondary battery 122 (B01) to be leased, the PID of the user (P10) and the address of the user (P10). The logistics company 114 picks up the secondary battery 122 (B01) from the management company 102 and delivers the secondary battery 122 (B01) to the user (P10). The user managing unit 146 updates data of the secondary battery information 210, the battery possession information 220, and the like (S90).

As described above, when the secondary battery 122 (B01) is returned, the secondary battery 122 (B01) enters the inventory of the management company 102. While the secondary battery 122 (B01) resides in the inventory, the battery securities (S01:B01) associated with the secondary battery 122 (B01) do not produce revenue. An unused state of the secondary battery 122 (B01), that is, entry of the secondary battery 122 (B01) in the inventory without being leased to another user is a risk for the investors.

Although the battery securities (S01:B01) impose the risk of the secondary battery 122 (B01) residing in the inventory, the system described above allows the management company 102 to distribute the inventory risk to a number of investors. Because it becomes easier for the management company 102 to control the inventory risk, the management company 102 is encouraged to positively purchase secondary batteries 122.

Note that, in addition to the case where the lessee of the secondary battery 122 (B01) is changed from the user (P01), that is a primary user, to another user (P10), that is a secondary user, there may be a case where a user (P01), that is a primary user, temporarily returns the secondary battery 122 (B01), and leases the same secondary battery 122 (B01) as a secondary user. For example, the user (P01) may lease and install the secondary battery 122 (B01) for an EV, and thereafter install the same secondary battery 122 (B01) for an ESS. In this manner, the primary user and the secondary user need not be different from each other. In this case, the user from which the fees for the secondary battery 122 (B01) are collected is not changed. Note that the use fees for primary use and for secondary use may be different from each other.

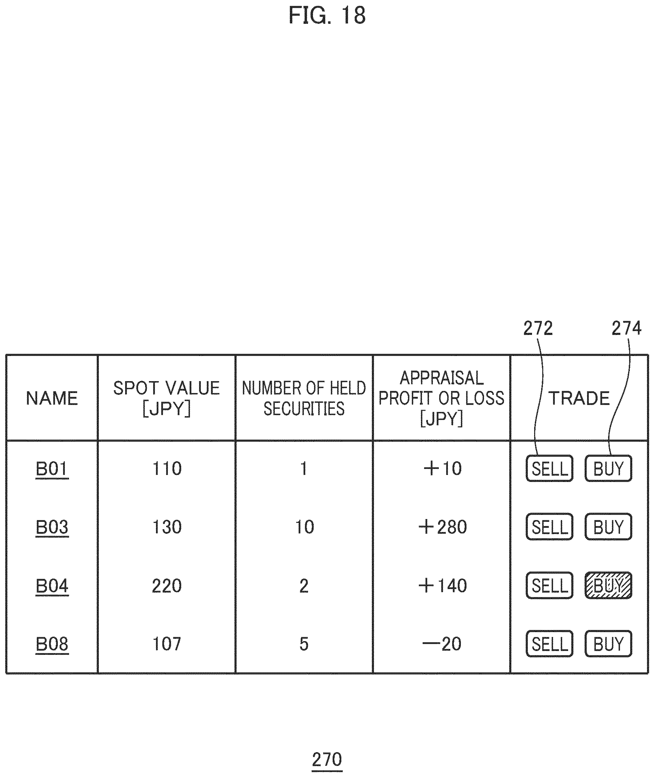

FIG. 18 is a screen diagram of an investment screen 270.

The investor managing unit 144 provides an investment screen 270 to the investor terminal 110. The output unit 170 of the investor terminal 110 causes the investment screen 270 indicating held statuses of battery securities to be displayed. FIG. 18 illustrates the investment screen 270 of an investor (101). The investment screen 270 displays the names, the spot values, the numbers, the appraisal profits or losses, and the like of battery securities held by the investor (101).

According to the investment screen 270 in FIG. 18, the investor (I01) holds one battery security (B01), and has an unrealized gain of "10 [JPY]" as displayed on "appraisal profit or loss". For additionally buying a battery security (B01), the investor (I01) can display a buy screen (not illustrated) by touching a BUY button 274. On the buy screen for the battery securities (B01), the investor (I01) gives an instruction to additionally buy a battery security (B01).

For selling a battery security (B01), the investor (I01) touches a SELL button 272. When the SELL button 272 is touched, the output unit 170 causes a sell screen (not illustrated) to be displayed. On the sell screen for the battery security (B01), the investor (I01) gives an instruction to sell the battery security (B01).

The securities company 112 brings selling orders and buying orders of battery securities together to conclude trades therebetween. The output unit 170 grays out the SELL button 272 or the BUY button 274 for a battery security that is not permitted to be bought or sold. For example, in FIG. 18, because no selling orders for battery securities (B04) are issued from any of investors, the output unit 170 grays out the BUY button 274 for the battery securities (B04). Thus, the investor (I01) cannot newly buy a battery security (B04). When a selling order of a battery security (B04) is issued, the securities company 112 notifies each investor terminal 110 that the battery security (B04) is on sale. At this point, the output unit 170 cancels the gray-out display of the BUY button 274.

The investor (I01) can cause an investment information screen (not illustrated) to be displayed by touching a name. The investment information screen displays a chart (price transition) of trading prices of battery securities. The investment information screen also displays part of the investment information 260 (see FIG. 11). In addition, the securities managing unit 142 may display information indicating the degree to which each battery security is undervalued on the investment information screen.

### <Overview>

The secondary battery management system 200 has been described above with reference to an embodiment.

A user can reduce the expense for initial introduction of a secondary battery 122 by leasing the secondary battery 122 instead of purchasing. The user pays use fees of the secondary battery 122 depending on the number of times of battery charge. Reduction in the costs for introduction of secondary batteries 122 encourages users to replace an old model secondary battery 122 with a new model secondary battery 122. Users need not dispose secondary batteries 122 after use but may return them to the management company 102. Because the management company 102 is responsible for the life cycles of secondary batteries 122, illegal dumping and unauthorized disposal of secondary batteries 122 can be reduced.

When the management company 102 purchases a secondary battery 122, the cost for purchasing secondary battery 122 can be covered by securitization. In addition, collection of part of use fees of secondary batteries 122 as its operating cost allows the management company 102 to constantly receive income from the secondary batteries 122. Securitization and collection of the operating budget can stabilize the management of the management company 102.
The management company 102 may set the use fees of a secondary battery 122 so that the initial cost thereof can be collected during primary use thereof, and profits can be made during secondary use and tertiary use thereof.

Users have various needs for secondary batteries 122. Some users may want to use a small number of high-performance secondary batteries 122, and others may want to gather a large number of secondary batteries 122 even with low SOH. The management company 102 can meet the needs of various users by leasing secondary batteries 122 returned from some users to other users. As a result of promotion of widespread distribution of secondary batteries 122, one secondary battery 122 will be used by a plurality of users, such as a primary user, a secondary user, and so on, for a long period. Long-term use of secondary batteries 122 is also important in terms of environmental protection. Because whether a secondary battery 122 endures long-term use, in addition to the performance of a new secondary battery 122, becomes important for users, the management company 102, and investors, the needs for development of high-quality secondary batteries 122 even of high prices can be stimulated.

Investors can get stable income gain by buying battery securities. Investors can also get capital gain through trading of battery securities. Furthermore, because battery securities are financial instruments that are hardly related to stocks, bonds, real estate, and commodities, construction of a portfolio including battery securities and other financial instruments is expected to increase the effect of diversified investment. Note that battery securities in the present embodiment may be debt instruments indicating claims on secondary batteries 122.

The secondary battery manufacturer 118 can expect a substantial order from the management company 102, and is therefore likely to stably produce secondary batteries 122.

For example, assume that secondary batteries 122 for EVs are to be used until the SOH reaches 80[%], and secondary batteries 122 for ESSs can be used until the SOH reaches 30[%]. In this case, a secondary battery 122 may be used for primary use for an EV while the SOH lowers from 100[%] to 80[%], and then used for secondary use for an ESS while the SOH lowers from 80[%] to 30[%]. Thus, one secondary battery 122 can be transferred from a primary user who wants a secondary battery 122 for an EV to a secondary user who wants a secondary battery 122 for an ESS. High use fees of the secondary battery 122 may be set for the EV, and lower use fees of the secondary battery 122 may be set for the ESS with less strict use conditions.

The fee setting unit 154 may set the use fees of a secondary battery 122 depending on the SOH (degradation level) of the secondary battery 122 at lease inception.
For example, assume that the use fee of a secondary battery 122 with SOH = 100[%] at lease inception is G [JPY]. Then, assume that the SOH of the secondary battery 122 has degraded to 80[%]. At a next lease inception, when the secondary battery 122 with SOH = 80[%] is to be used for secondary use, the fee setting unit 154 may set a use fee of 0.8×G [JPY], which is obtained by multiplying the use fee G [JPY] by SOH = 80% at the lease inception, for the user. Such a control method encourages a secondary user to introduce a used secondary battery 122, which further facilitates widespread distribution of secondary batteries 122.

Typically, the degradation progression degree of a secondary battery 122 for an EV is likely to vary depending on the manner in which a user uses the EV. Thus, a high SOH is required of a secondary battery 122 for an EV. In contrast, because a secondary battery 122 for an ESS is used in a stable manner, the degradation thereof is slow, and the SOH thereof is not required to be as high as that for an EV. When the cost for purchasing a secondary battery 122 can be collected during primary use thereof, the management company 102 is encouraged to lease the secondary battery 122 at a low price. In the end, it is desirable that the management company 102 collect the secondary battery 122 that has become unusable, disassemble it and reuse parts thereof.

The nature of battery securities as financial instruments changes depending on the scene in which a secondary battery 122 is used. In a case of an ESS, because battery charge is likely to be carried out stably, the income is likely to be stable even with low use fees. For an investor who seeks safe and stable income, battery securities associated with a secondary battery 122 used for secondary use in an ESS or the like may be an attractive investment option.

As described above, in a case where a secondary battery 122 is of high performance and high price, the trading price of battery securities tends to be high. Such a secondary battery 122, however, can be used over a long period, which is favorable in terms of long-term investment. In addition, a user can be offered a reduction in the use fee as a result of carefully using a secondary battery 122. A user who uses a secondary battery 122 over a long period is also favorable to investors. In addition, the management company 102 is eager to lease secondary batteries 122 to superior users. Such a mechanism encourages development of superior secondary batteries 122, and encourages users to carefully use secondary batteries 122.

The appeal of investment increases when a user of a secondary battery 122 changes. The value of battery securities varies depending on the user of the secondary battery 122. When the user changes, the decision on whether to continue investing in, sell or additionally buy the battery securities is important for the investor.

When a user has returned a secondary battery 122 or when the management company 102 has securitized a secondary battery 122, the secondary battery 122 is in an unused state until a new user is determined. Because no use fee is incurred from a secondary battery 122 in the unused state, income gain may not be obtained from the battery securities. Hereinafter, the risk of inventors failing to get income gain until a secondary battery 122 being in the unused state is newly leased will be referred to as an "unused state risk".

When there is much demand for secondary batteries 122, the unused state risk is low. In contrast, when there is excessive supply of secondary batteries 122, the unused state risk is high. When the unused state risk is high, the trading prices of battery securities will be low. Conversely, when there much demand for secondary use of secondary batteries 122 for ESSs or the like, the trading price of battery securities may be higher than the security price during primary use. Investors can enjoy investment unique to secondary batteries 122 by selling or buying battery securities on the basis of foreseeing of demand, consensus about the unused state risk and their own forecast for market tendency.

The present invention is not limited to the embodiment described above and modifications thereof, and any component thereof can be modified and embodied without departing from the scope of the invention. Components described in the embodiment and modifications can be combined as appropriate to form various other embodiments. Some components may be omitted from the components presented in the embodiment and modifications.

While the secondary battery management system 200 includes a plurality of investor terminals 110, a plurality of user terminals 108, and one secondary battery management server 100 in the description above, some of the functions of the investor terminals 110 or the user terminals 108 may be implemented by the secondary battery management server 100, and some functions of the secondary battery management server 100 may be allocated to the investor terminals 110 or the user terminals 108. In addition, a third device other than the investor terminals 110, the user terminals 108, and the secondary battery management server 100 may have some functions of the secondary battery management server 100, the investor terminals 110, or the user terminals 108. From a broader point of view, the collection of the functions of the investor terminal 110 and the user terminal 108 and the functions of the secondary battery management server 100 described with reference to FIG. 5 can be regarded as one "information processing device (secondary battery management device)". How the functions necessary for achieving the present invention are to be distributed to one or more pieces of hardware may be determined in view of the processing capability of each piece of hardware, the specification required of the secondary battery management system 200, and the like.

### <Modifications>

In the description of the present embodiment, a DI engine having communication functions is mounted in each secondary battery 122. In a modification, a DI engine may be mounted in the electronic equipment 106 instead of being mounted in the secondary battery 122. The DI engine may be a device including at least communication functions and a function of measuring the performance of a secondary battery 122. The DI engine may be configured as an IC chip providing functions necessary for causing the electronic equipment 106 function as IoT equipment.

The secondary battery information 210 (FIG. 6) may be saved in a secondary battery 122 or in electronic equipment 106. Alternatively, the secondary battery information 210 may be saved in the secondary battery management server 100. For example, a DI engine of a secondary battery 122 may periodically transmit the performance and the state of the secondary battery 122 to the secondary battery management server 100, and the performance information acquiring unit 140 of the secondary battery management server 100 may save the performance information in the data storage unit 134.

Part of use fees from users may be paid to the securities company 112. The securities company 112 may earn revenue from battery securities trading commissions.

The management company 102 may purchase a carbon credit. The expense for purchasing the carbon credit may be added to the sale price of battery securities. For example, assume that the price of a carbon credit in an amount that can offset the carbon emission necessary for manufacture of a secondary battery 122 is Q [JPY]. When n battery securities are issued for this secondary battery 122, the management company 102 may add Q/n [JPY] to the sale price D [JPY]. The management company 102 may collect the expense for the carbon credit by setting the additional amount to the operating budget obtained from the use fees of the secondary battery 122.

The secondary battery management server 100 may have all or part of trade brokering functions of the securities company 112. For example, the secondary battery management server 100 may include a trade processing unit (not illustrated). The trade processing unit may broker trading of battery securities by receiving buying orders and selling orders from investors and performing matching therebetween.

A user may pay a use fee depending on the degradation progression degree. For example, each time the degradation level increases by 1[0], that is, each time the SOH lowers by 1[%], the user may pay a use fee of F [JPY]. In this case, the sale price D [JPY] is determined so that M-D×n = k×G×c×v+F×J×v is satisfied. Note that the variable J represents an estimated degradation progression degree per month. Note that the sale price may be determined by the securities company 112 instead of the secondary battery management server 100.

In the description of the present embodiment, the secondary battery management server 100 settles use fees and instructs the securities company 112 to distribute dividends, obtained by deducting a management cost from the use fees, to investors. Thus, the secondary battery management server 100 and the securities company 112 each perform settlement. In a modification, the secondary battery management server 100 may collect use fees from users, transfer part of the collected use fees as a management cost to the account of the management company 102, and transfer the rest as dividends to the accounts of investors. Thus, the settlement of a management cost and dividends may be collectively performed by the secondary battery management server 100.

The investor managing unit 144 of the secondary battery management server 100 may notify a user of investor names. In this case, the user can know who invests to the secondary battery 122 the user uses. For example, if a user knows that a famous investor invests to the user by means of battery securities, the user can feel the expectation and trust from the famous investor, which further increases the user's motivation to use the secondary battery 122 carefully. In addition, a user popular with many investors can achieve a status as a user attracting attention from investors. In this manner, the motivation for being a superior user can be increased through investment.

Financial support through secondary batteries 122 can also be considered. For example, in a case where an investor B invests in battery securities associated with a secondary battery 122 of a user A, the use fee from the user A is paid as a dividend to the investor B. If the user A is a son of the investor B, the user A can financially support the investor B (parent) by using the secondary battery 122.

If a company Y achieves a positive reputation as a company that carefully uses secondary batteries 122, investors are encouraged to actively invest in secondary batteries 122 used by the company Y. In addition, the company Y is expected to use the secondary batteries 122 more carefully to protect such reputation. Such behavior of the company Y contributes not only to reduction in use fees and improvement in the corporate image, but also to environmental protection. In addition, because battery securities associated with the secondary batteries 122 used by the company Y become easier to sell, a superior user like the company Y is also favorable to the management company 102.

Employees of the company Y may become investors in the secondary batteries 122 used by the company Y. As a result of using the secondary batteries 122 carefully, the employees of the company Y themselves can obtain the benefits of dividends. The company Y may collectively buy battery securities associated with the secondary batteries used by the company Y from the securities company 112, and resell the battery securities to the employees.

In the description of the present embodiment, a user pays use fees depending on the number of times of battery charge. In a modification, a user may pay use fees depending on the amounts of battery charge. Alternatively, a user may pay use fees depending on the length of use of a secondary battery 122.

In the case where use fees are paid depending on the amounts of battery charge, the use fees may be changed in view of the SOH. For example, assume that a use fee of 30 [JPY] per 1 [kWH] is set. In a case where a user (P01) charges a secondary battery 122 (BX) with a capacitance of 1 [kWH] once a day, a total use fee for five years is 37,500 [JPY] (= 30×250×5). Herein, the number of operating days per year is assumed to be 250 days, and the secondary battery 122 (BX) is assumed to be fully charged once a day.

As the SOH lowers, the amount of each charging of the secondary battery 122 (BX) becomes smaller. For example, when the capacitance of the secondary battery 122 (BX) lowers from 1 [kWH] to 0.9 [kWH], the use fee per battery charge may be set to 27 [JPY] (= 30×0.9). In this manner, the fee setting unit 154 may vary the unit use fee depending on the SOH at battery charge.

In one example, assume that the SOH of the secondary battery 122 (BX) from 10th to 15th of May was 100[%], and that the user (P01) performed full battery charge once a day. In this case, the total use fee for the six days is 180 [JPY] (= 30×6×10). Subsequently, assume that the SOH of the secondary battery 122 (BX) from 16th to 22nd of May was 99[%], and that full battery charge was also performed once a day. In this case, the total use fee for the seven days is 208 [JPY] (= 30×7×0.99). In this manner, the fee setting unit 154 may correct the use fee per battery charge on the basis of the SOH at battery charge. An integrated value of the use fee per battery charge is the total use fee of the secondary battery 122 (BX).

Assume that the secondary battery 122 (BX) with SOH = 80[%] is leased to a user (P02). Assume that the use fee per 1 [kWH] in secondary use is 8 [JPY]. In a case where the secondary battery (BX) is used for 365 days per year and charged once a day, the total use fee for 10 years is 29,200 [JPY] (= 8×365×10). As described above, the use fee of the secondary battery 122 (BX) may be variable with the decrease in SOH.

Assume that the user (P02) used the secondary battery 122 (BX) for 10 years and the SOH lowered from 80[%] to 70[%]. In another example, the fee setting unit 154 may give a refund of 2,920 [JPY] corresponding to 10[%] (= 80-70) of 29,200 [JPY] described above to the user (P02).

As the degradation of the secondary battery 122 (BX) progresses, part of electrical energy for fully charging the secondary battery 122 (BX) becomes likely to be converted into thermal energy. In other words, the charging efficiency is degraded as the SOH lowers. For example, when SOH = 100[%], the secondary battery 122 (BX) is fully charged to SOC = 100[%]. When SOH = 90[%], the battery charge can be controlled to an upper limit of SOC = 90[%] to prevent degradation in the charging efficiency.

When the SOH of the secondary battery 122 (BX) with a capacitance of 1 [kWH] is SOH = 100[%], the use fee per battery charge is 30 [JPY]. In contrast, when the SOH of the secondary battery 122 (BX) is degraded to 90[%], the use fee per battery charge is 24.3 [JPY] (= 30×0.9×0.9). This is because the amount of each charging of the secondary battery 122 (BX) is 0.81 [kWH] (=1×0.9×0.9) when SOH = 90[%].

When the secondary battery 122 (BX) is degraded, the amount of each charging is smaller, and the use fee per battery charge is thus lower. The number of times of battery charge, however, increases, which allows investors to secure profits even when the degradation of the secondary battery 122 (BX) progresses. If the secondary battery 122 (BX) is degraded within a short period, however, the number of times of battery charge increases as described above, and the user who feel it bothersome is likely to replace the secondary battery 122 (BX) with a new secondary battery (BX). As a result, the period during which the investors receive revenue from the battery securities is shortened. Thus, the investors need to consider when to sell out the battery securities by monitoring the degradation of the secondary battery 122 (BX).

The value of battery securities is affected not only by slower degradation of a secondary battery 122 but also by individual differences (variation in quality) of secondary batteries 122. For example, assume that the manufacturing quality of secondary batteries 122 manufactured by a secondary battery manufacturer 118 (M2) varies less than that of secondary batteries 122 manufactured by a secondary battery manufacturer 118 (M1). It takes a longer time to charge a secondary battery 112 having a large internal resistance due to manufacturing failure than a normal secondary battery 122. Thus, a user who has leased a low-quality secondary battery 122 will return the leased secondary battery 122 and lease a new secondary battery 122. This is disadvantageous for investors who bought battery securities associated with the low-quality secondary battery 122. The user and the investors will therefore prefer secondary batteries 122 manufactured by the secondary battery manufacturer 118 (M2) to those manufactured by the secondary battery manufacturer 118 (M1). In addition, for a secondary battery manufacturer 118, evaluation thereof will be likely to be based not only on the performance but also on the stability of manufacturing quality.

The securities managing unit 142 may package a plurality of battery securities according to themes thereof. For example, the securities managing unit 142 may group battery securities associated with secondary batteries 122 used by a company Z as a user, and sell a package of "battery securities based on secondary batteries 122 used by Company Z". Investors who have trust in the company Z may buy such battery securities as a package.

In addition, "battery securities based on secondary batteries 122 manufactured by Company S", "battery securities based on secondary batteries 122 manufactured in Japan", "battery securities based on secondary batteries 122 used for secondary use", "battery securities based on secondary batteries 122 used only by users with overall rank of 4 or higher", "battery securities based on secondary batteries 122 used in Tohoku (specific area)", and the like can be considered. Packaging of battery securities according to themes facilitates support of investors in making investment decision. For example, investors who emphasize Sustainable Development Goals (SDGs) can support secondary use of secondary batteries 122 through investment activity by actively investing to "battery securities based on secondary batteries 122 used for secondary use".

The secondary battery management server 100 may include a rating processing unit (not illustrated) that performs rating of battery securities. The rating processing unit may calculate rating of a battery security by a multivariate function of numerical values indicating the performance of a secondary battery 122 such as the overall rank of a user and the life-time number of charge and discharge cycles. The rating may be included in the investment information 260 to support investment decision.

A user may set a degradation threshold for a secondary battery 122. The secondary battery management server 100 may automatically collect the secondary battery 122 when the degradation level of the secondary battery 122 has reached the degradation threshold. For example, assume that the degradation level of a secondary battery used by a user A has exceeded a degradation threshold (for example, 20[0]). In this case, a replacement processing unit (not illustrated) of the secondary battery management server 100 notifies the user A of the replacement of the secondary battery, and instructs the logistics company 114 to collect the secondary battery 122 from the user A. According to such a control method, the secondary battery management server 100 automatically collects a secondary battery 122 when the degradation level thereof has reached a predetermined degradation threshold, the user can effectively avoid a situation of continuing to use a secondary battery 122 that no longer has the required performance. In addition, the replacement processing unit may instruct the logistics company 114 to deliver a new secondary battery 122 to the user A.

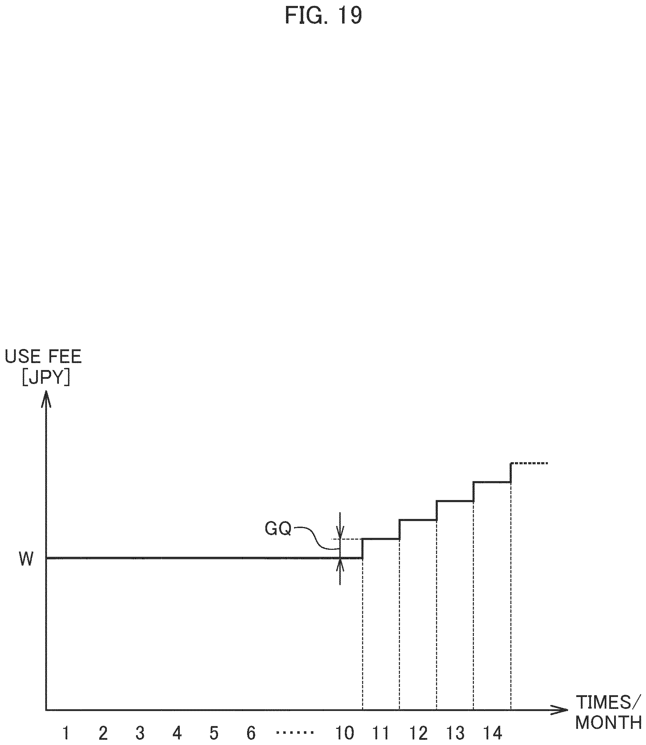

FIG. 19 is a schematic graph for explaining a method for determining a use fee according to a modification.

In the description of the present embodiment, a use fee is "G [JPY] × (the number of times of battery charge)". In a modification, a fixed price (basic use fee) of W [JPY] may be set up to a number L of times of battery charge per month (for example, 10 times), and a use fee of GQ [JPY] per battery charge may be added from the (L+1)th battery charge (for example, 11th battery charge). In other words, only the fixed price is charged when a use condition of the number of times of battery charge per month being within L is satisfied.

Assume that W/L > GQ. In this case, the use fee per battery charge is "W/L [JPY]" until the L-th charge, and the use fee per charge becomes lower from the (L+1)th battery charge. This fee setting is advantageous for users that actively use secondary batteries 122. In addition, because the basic use fee of W [JPY] is always incurred even to inactive users that do not use secondary batteries 122 very often, this allows the management company 102 and investors to secure the income.

The operating budget of the management company 102 may correspond to the basic fee of W [JPY], and an additional use fee in excess of W [JPY] may be paid as dividends to investors. Such fee setting can stabilize the income of the management company 102, and distributes the risk to investors. On the other hand, it may be considered to lower the sale price of battery securities to match the investment risk.

When a degradation progression degree per month is equal to or lower than a predetermined threshold, the fee setting unit 154 may discount the use fee for the user. For example, when the degradation progression degree per month is lower than 1[%], the fee setting unit 154 may deduct 10[0] from the original use fee. Such fee setting taking the degradation progression degree into account further encourages users to carefully use secondary batteries 122.

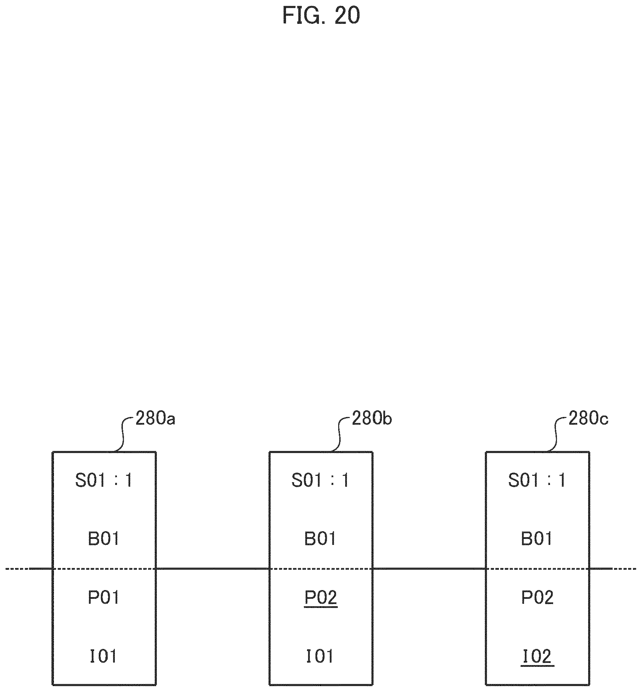

FIG. 20 is a schematic diagram of a securities blockchain 280 according to a modification.

In the description of the present embodiment, the information on secondary batteries 122 and battery securities is managed by the secondary battery management server 100. In a modification, management of the information on battery securities and the like may be distributed in a blockchain.

In the description herein, a securities blockchain 280 that manages battery securities is assumed. First, a block 280a is a block relating to a battery security (SO1:1). According to the block 280a, the battery security (SO1:1) is associated with a secondary battery 122 (B01) and bought by an investor (101). The secondary battery 122 (B01) is used by a user (P01).

Assume that the user (P01) has returned the secondary battery 122 (B01), and a user (P02) has leased the secondary battery 122 (B01). In this case, the user (P02) generates a block 280b by the user terminal 108. In the block 280b, the holder of the battery security (SO1:1) is changed to the user (P02).

When the block 280b is authenticated by a method similar to that for a typical blockchain, the block 280b is connected to the block 280a. After the block 280b is connected to the securities blockchain 280, the fee collecting unit 148 collects use fees from the user (P02) instead of the user (P01). Note that the securities managing unit 142 of the secondary battery management server 100, instead of the user (P02), may generate the block 280b.

Subsequently, assume that the investor (I01) has sold the battery security (S01:1), which is then bought by an investor (I02). In this case, the investor (I02) generates a block 280c by the investor terminal 110. In the block 280c, the holder of the battery security (SO1:1) is changed to the investor (I02).

After being authenticated, the block 280c is connected to the block 280b. After the block 280c is connected to the securities blockchain 280, the dividend distributing unit 150 transfers dividends to the investor (I02).

Investors can check the history of each battery security by referring to the securities blockchain 280. In addition to or instead of information on battery securities, information on secondary batteries 122 may be managed by a blockchain.

## Claims

1. A secondary battery management device comprising:
a securities managing unit to associate a secondary battery with one or more securities;
an investor managing unit to associate a security with an investor that has bought the security;
a user managing unit to associate a secondary battery with a user being a lessee of the secondary battery;
a fee collecting unit to collect a use fee of a secondary battery from a user being a lessee of the secondary battery;
a dividend distributing unit to issue an instruction to transfer a dividend based on a security of a secondary battery to an investor that has bought the security; and
a transmitting unit to transmit investment information to an external terminal, wherein
the securities managing unit manages a security in association with investment information, and when an installation position of a secondary battery has changed from a first installation position to a second installation position, the securities managing unit changes registration of the installation position of the secondary battery from the first installation position to the second installation position in the investment information of the security associated with the secondary battery, and
the transmitting unit transmits the investment information resulting from the change of registration to the external terminal.

2. The secondary battery management device according to claim 1, wherein the securities managing unit sets a sale price of a security of a secondary battery on the basis of a price of a carbon credit capable of offsetting a carbon emission necessary for manufacture of the secondary battery.

3. The secondary battery management device according to claim 1, wherein when a lessee of a secondary battery has changed from a first user to a second user, the fee collecting unit changes the user from which a use fee of the secondary battery is collected from the first user to the second user.

4. The secondary battery management device according to claim 1, wherein when a first investor holding a security of a secondary battery has transferred the security to a second investor, the dividend distributing unit changes a recipient of a dividend based on the secondary battery from the first investor to the second investor.

5. The secondary battery management device according to claim 1, wherein when an installation position of a secondary battery has changed from the first installation position to the second installation position, the fee collecting unit changes a use fee of the secondary battery.

6. The secondary battery management device according to claim 1, further comprising:
a performance information acquiring unit to acquire performance information of a secondary battery during a lease period; and
a degradation measuring unit to measure a degradation level of the secondary battery on the basis of the acquired performance information, wherein
the transmitting unit further transmits the degradation level of the secondary battery in the investment information.

7. The secondary battery management device according to claim 6, wherein
the user managing unit sets a rank indicating an ability of a user to use a secondary battery on the basis of the acquired performance information,
the securities managing unit further manages the rank relating to the user of the secondary battery as part of the investment information, and
the transmitting unit further transmits the investment information including the rank.

8. The secondary battery management device according to claim 7, further comprising:
a fee setting unit to manage a use fee of a secondary battery, wherein
the fee setting unit sets the use fee of a secondary battery depending on the rank of a user.

9. The secondary battery management device according to claim 1, wherein
the securities managing unit further manages user information indicating an attribute of a user of a secondary battery as investment information, and
the transmitting unit further transmits the investment information including the user information.

10. The secondary battery management device according to claim 1, wherein the fee collecting unit collects a use fee depending on the number of times of charging a secondary battery.

11. The secondary battery management device according to claim 10, wherein the fee collecting unit collects a fixed first fee as the use fee of a secondary battery for a predetermined unit period when a predetermined use condition is satisfied, and collects an additional second fee when the use condition is not satisfied.

12. A secondary battery management device comprising:
a securities managing unit to associate a secondary battery with one or more securities;
an investor managing unit to associate a security with an investor that has bought the security;
a user managing unit to associate a secondary battery with a user being a lessee of the secondary battery;
a fee collecting unit to collect a use fee of a secondary battery from a user being a lessee of the secondary battery; and
a dividend distributing unit to issue an instruction to transfer a dividend based on a security of a secondary battery to an investor that has bought the security, wherein
when a first investor holding a security of a secondary battery has transferred the security to a second investor, the dividend distributing unit changes a recipient of a dividend based on the secondary battery from the first investor to the second investor.

13. A secondary battery management device comprising:
a securities managing unit to associate a secondary battery with one or more securities;
an investor managing unit to associate a security with an investor that has bought the security;
a user managing unit to associate a secondary battery with a user being a lessee of the secondary battery;
a fee collecting unit to collect a use fee of a secondary battery from a user being a lessee of the secondary battery; and
a dividend distributing unit to issue an instruction to transfer a dividend based on a security of a secondary battery to an investor that has bought the security, wherein
when a lessee of a secondary battery has changed from a first user to a second user, the fee collecting unit changes the user from which a use fee of the secondary battery is collected from the first user to the second user.

14. A secondary battery management device comprising:
a fee collecting unit to collect a use fee of a secondary battery from a user being a lessee of the secondary battery; and
a dividend distributing unit to transfer a dividend based on a security associated with the secondary battery to an investor that has bought the security, wherein
when a first investor holding a security of a secondary battery has transferred the security to a second investor, the dividend distributing unit changes a recipient of a dividend based on the secondary battery from the first investor to the second investor.
